(19) Europäisches Patentamt / European Patent Office / Office européen des brevets

(11) **EP 3 864 967 A1**

(12) **EUROPEAN PATENT APPLICATION**
published in accordance with Art. 153(4) EPC

(43) Date of publication:
**18.08.2021 Bulletin 2021/33**

(21) Application number: **20852094.0**

(22) Date of filing: **19.03.2020**

(51) Int Cl.:
*A23L 5/00* (2016.01)     *A23L 7/10* (2016.01)
*A23L 11/00* (2021.01)     *A23L 19/00* (2016.01)
*A23L 19/12* (2016.01)     *A23L 25/00* (2016.01)

(86) International application number:
**PCT/JP2020/012219**

(87) International publication number:
**WO 2021/029103 (18.02.2021 Gazette 2021/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.08.2019 JP 2019148110**

(71) Applicant: **Mizkan Holdings Co., Ltd.**
**Handa-shi, Aichi 475-8585 (JP)**

(72) Inventor: **RYU, Mai**
**Handa-shi, Aichi 475-8585 (JP)**

(74) Representative: **Mewburn Ellis LLP**
**Aurora Building**
**Counterslip**
**Bristol BS1 6BX (GB)**

(54) **EDIBLE PLANT-CONTAINING PUFFED FOOD COMPOSITION AND METHOD FOR MANUFACTURING SAME**

(57)     Provided is a puffed food composition which has crispy texture, is unlikely to stick to teeth, and exhibits suppressed astringent taste.

A puffed food composition comprising an edible plant that satisfies all of (1)-(6):
(1) comprises 3 mass% or more of insoluble dietary fibers;
(2) comprises 5 mass% or more of starch;
(3) comprises 4 mass% or more of protein;
(4) the particle size d60 of particles in a dispersion liquid of the puffed food composition after disturbance is 0.3 to 1,000 $\mu$m ;
(5) the maximum particle size of particles in a dispersion liquid of the puffed food composition before disturbance is 200 $\mu$m or more; and
(6) the minimum differential value measured by method 1 is -100 kN/m$^2$% or less:
[method 1]
using a texture analyzer, the surface of the puffed food composition at a product temperature of 20°C is pressed with a disc-type plunger at a descending speed of 1 mm/sec to a deformation rate of 60%, the stress (kN/m$^2$) is continuously measured at intervals of 0.02 seconds, and the differential value (kN/m$^2$%) at each deformation rate (%) is determined from a change in stress value until attainment of the minimum deformation rate.

EP 3 864 967 A1

**Description**

TECHNICAL FIELD

The present invention relates to a puffed food composition containing an edible-plant and a method for manufacturing the same.

BACKGROUND ART

Conventionally, an effort to optimize the blend ratio of starch and the like in a puffed food composition as included in confectionery in order to provide a crispy texture. However, there was a problem in a puffed food that it easily adheres to teeth at chewing and it gives strong astringent taste caused by water absorption of the puffed food composition. In particular, a puffed food composition containing insoluble dietary fiber usually gives strong astringent taste, which interfered with eating.

Therefore, there has been a demand for a puffed food composition having a crispy texture and hardly adhering to teeth and further having suppressed astringent taste.

Incidentally, astringent taste (astringency) is a taste which gives a feeling of licking in the mouth when the composition is contained in the mouth. Although the mechanism for its occurrence is not evident, the astringent taste is considered to be a sensation similar to a sensation perceived by cell contraction in the mouth, unlike taste perceived by stimulating taste neurons. For example, red wine is said to give a rough taste derived from tannins contained in grapes, but astringent taste is a different sensation from this rough taste, or even a bitter taste or a pungent taste, although similar.

To address them, Patent Literature 1 discloses a method for manufacturing a food having a high content of dietary fibers, in which a mixture of main raw materials (e.g., cereals and starches) and dietary fiber powders is kneaded, pressurized and heated by an extruder of two or more axes, and then rapidly discharged under normal temperature and normal pressure, to puff. It is said that the technology serves to avoid extremely poor texture caused by rough surface of a dried food when 10% or more of the fibrous material is mixed in the dried food. Patent Literature 2 discloses a process for manufacturing a puffed snack confectionery by directly puffing a raw material composed of a mixture of a starchy raw material and dietary fibers by using an extruder. It is said that the technology serves to provide a puffed snack having stable shape and improved texture.

However, although both Patent Literature 1 and Patent Literature 2 teach improvement in texture in the presence of high content of dietary fibers, they are silent on suggestion or teaching on improvement in taste, particularly suppression in an astringent taste of insoluble dietary fibers.

Regarding a technique for suppressing an astringent taste of foods, Patent Literature 3 discloses that, with a food composition containing (A) chlorogenic acids in a content of 0.001 mass% or more and (B) L-tryptophan at a mass ratio of the component (A) and the component (B), [(B)/(A)], to from 0.00005 to 0.03, astringent taste of the chlorogenic acids as well as bitter taste of the L-tryptophan can be suppressed. Patent Literature 4 discloses that use of sucralose in combination with polyphenols exhibiting rough taste or astringent taste serves to suppress these tastes. Patent Literature 5 discloses a method for removing grassy taste unique to vegetables and/or legumes, and unpleasant taste/odor such as astringent taste, by adding lactic acid bacteria to processed foods of vegetables and/or legumes, maintaining it and suppressing the production amount of lactic acid to from 0 to 0.3%.

However, in Patent Literatures 3 and Patent Literature 4, the astringent taste was not derived from insoluble dietary fibers, and a special component needs to be contained in order to suppress the astringent taste. In Patent Literature 5, although additional component was not necessary, it required a special process of fermentation by lactic acid bacteria, and so it was not comprehensively applicable to all kinds of food and drink.

As described above, in the puffed food, there was room for improvement in achieving all of a crispy texture, a suppression of adhesion to teeth, and suppression in astringent taste at the same time.

CITATIONS

PATENT LITERATURES

Patent Literature 1 JP-A-sho 62-55045
Patent Literature 2 JP-A-2001-204388
Patent Literature 3 JP-A-2018-191634
Patent Literature 4 JP-A-2008-99677
Patent Literature 5 JP-A-2005-21137

# SUMMARY OF THE INVENTION

## PROBLEM

The present invention aims to provide a puffed food composition providing a crispy texture, hardly adhering to teeth and having suppressed astringent taste.

## SOLUTION

As a result of energetic studies in view of the above circumstances, the present inventor focused on the effect by insoluble dietary fibers, starch and proteins derived from edible plants, adjusted the content of each component to a certain level or more, controlled the particle size of the puffed food composition before and after disturbance, stress of the puffed food composition, the present inventors found that the above problems can be easily solved. Further, the present inventors energetically advanced the researches to complete the following invention.

The present invention provides the following [1] to [19] .

[1] A puffed food composition, comprising an edible plant and satisfying all of following characteristics (1) to (6) :

(1) the puffed food composition comprises 3 mass% or more of insoluble dietary fibers;
(2) the puffed food composition comprises 5 mass% or more of starch;
(3) the puffed food composition comprises 4 mass% or more of protein;
(4) the particle size d60 of particles in a dispersion liquid of the puffed food composition after disturbance is 0.3 $\mu$m or more and 1,000 $\mu$m or less;
(5) the maximum particle size of particles in a dispersion liquid of the puffed food composition before disturbance is 200 $\mu$m or more; and
(6) the minimum differential value measured by method 1 is -100 kN/m$^2$% or less:
[method 1]
using a texture analyzer, the surface of the puffed food composition at a product temperature of 20°C is pressed with a disc-type plunger at a descending speed of 1 mm/sec to a deformation rate of 60%, the stress (kN/m$^2$) is continuously measured at intervals of 0.02 seconds, and the differential value (kN/m$^2$%) at each deformation rate (%) is determined from a change in stress value until attainment of the minimum deformation rate.

[2] The puffed food composition according to [1], wherein the difference in integrated frequency in % of particles with a particle size of 20 $\mu$m or more and 2,000 $\mu$m or less before and after ultrasonication is 25% or less.
[3] The puffed food composition according to [1] or [2], wherein the maximum value of stress measured by method 1 is 300 kN/m$^2$ or more.
[4] The puffed food composition according to any one of [1] to [3], wherein a density is 1.00 g/cm$^3$ or less.
[5] The puffed food composition according to any one of [1] to [4], wherein the content of the edible plant is 10 mass% or more.
[6] The puffed food composition according to any one of [1] to [5], which is not a preparation by cooking with oil.
[7] The puffed food composition according to any one of [1] to [6], which is a preparation by an extruder.
[8] The puffed food composition according to any one of [1] to [7], comprising the inedible part of the edible plant at 1 mass% or more and 90 mass% or less with respect to the whole composition.
[9] The puffed food composition according to any one of [1] to [8], wherein the edible part and the inedible part of the edible plant are derived from the same type of edible plants.
[10] The puffed food composition according to any one of [1] to [9], wherein the edible part and the inedible part of the edible plant are derived from the same individual edible plant.
[11] The puffed food composition according to any one of [1] to [10], wherein the edible plant is one or more selected from the group consisting of grains, potatoes, pulses, nuts, vegetables, fruits and mushrooms.
[12] The puffed food composition according to any one of [1] to [11], wherein the edible plant comprises one or more pulses selected from the group consisting of Pisum, Phaseolus, Cajanus, Vigna, Vicia, Cicer and Lens.
[13] The puffed food composition according to any one of [1] to [12], wherein the edible plant is one or more selected from the group consisting of paprika, beet, corn, carrot, pumpkin, cabbage, pea, chickpea, kidney bean, broad bean, mug bean, lotus beet, burdock, chickpea, rice and potato.
[14] The puffed food composition according to any one of [1] to [13], comprising a seed coat of a pulse.
[15] The puffed food composition according to any one of [1] to [14], wherein the proportion of purified starch with respect to the total starch content of the composition is 50 mass% or less.
[16] The puffed food composition according to any one of [1] to [15], wherein the proportion of pulse-derived starch with respect to the total starch content of the composition is 30 mass% or more.

[17] The puffed food composition according to any one of [1] to [16], wherein the proportion of wheat-derived starch with respect to the total starch content of the composition is 50 mass% or less.

[18] A food comprising the puffed food composition according to any one of [1] to [17].

[19] A method for producing a puffed food composition comprising an edible plant, the method comprising following steps (i) to (iii):

(i) preparing a pasty dough composition comprising an edible plant and having an insoluble dietary fiber content of 3 mass% or more in terms of dry mass, a starch content of 5 mass% or more in terms of dry mass and a protein content of 4 mass% or more in terms of dry mass;
(ii) kneading the composition of (i) at a temperature of 100°C or higher under a pressurized condition; and
(iii) bringing the composition of (ii) back to ordinary pressure at a temperature of 100°C or higher.

Advantageous Effect of the Invention

The present invention provides a puffed food which has crispy texture, which is unlikely to stick to the teeth, and which exhibits improved astringent taste.

Detailed Description of the Embodiment

[Puffed Food Composition]

The present invention relates to a puffed food composition containing an edible plant and satisfying all of following characteristics (1) to (6):

(1) the puffed food composition contains 3 mass% or more of insoluble dietary fibers;
(2) the puffed food composition contains 5 mass% or more of starch;
(3) the puffed food composition contains 4 mass% or more of protein;
(4) the particle size d60 of particles in a dispersion liquid of the puffed food composition after disturbance is 0.3 $\mu$m or more and 1,000 $\mu$m or less;
(5) the maximum particle size of particles in a dispersion liquid of the puffed food composition before disturbance is 200 $\mu$m or more; and
(6) the minimum differential value measured by method 1 is -100 kN/m$^2$% or less:
[method 1]
using a texture analyzer, the surface of the puffed food composition at a product temperature of 20°C is pressed with a disc-type plunger at a descending speed of 1 mm/sec to a deformation rate of 60%, the stress (kN/m$^2$) is continuously measured at intervals of 0.02 seconds, and the differential value (kN/m$^2$%) at each deformation rate (%) is determined from a change in stress value until attainment of the minimum deformation rate.

The "puffed food composition" in the present invention refers to a food composition prepared by expanding a raw material. Specific examples thereof include cereal puffs obtained by applying pressure to a raw material containing a dry edible plant, followed by rapidly releasing the raw material to ordinary pressure, thereby expanding and evaporating moisture in the raw material to cause expansion.

The "puffed food composition" in the present invention refers to a food utilizing an action of expansion by decompression, and a composition containing the food.

(Edible Plant)

The edible plant in the present invention may be any plant that is eaten or drunk by human and is not limited in any way, and examples thereof include grains, potatoes, pulses, nuts, vegetables, fruits and mushrooms. These edible plants may be used alone or in an arbitrary combination of two or more thereof. These foodstuffs may be used directly or may be used after various treatments (e.g. drying, heating, harshness removal, peeling, seed removal, ripening, salting, and pericarp processing). The classification of an edible plant can be determined based on the state of the whole plant including the edible part and the inedible part.

The grain may be of any type as long as its edible part and/or inedible part contains insoluble dietary fibers. Examples thereof include, but are not limited to, amaranthus, millet, oat, barley, common millet (Panicum milliaceum), quinoa, wheat, rice, sugar cane, sugar cane, buckwheat, corn (maize), Coix ma-yuen, barnyard millet, fonio, and sorghum. Of these, corn is preferable, and sweet corn is particularly preferable.

The potato may be of any type as long as its edible part and/or inedible part contain insoluble dietary fibers. Examples thereof include, but are not limited to, sunchoke, konjac (Amorphophallus konjac), sweet potato, taro (Colocasia esculenta), water arum, yam (Colocasia esculenta "Yatsugashira"), potato, yam (Dioscorea japonica), yam, cinnamon vine, Chinese yam, Japanese yam, water yam, cassava, yacon, dasheen, taccad, purple fleshed sweet potato, and true yam. Of these, sweet potato, purple fleshed sweet potato and the like are preferable, and sweet potato is particularly preferable.

The pulse may be of any type as long as its edible part and/or inedible part contains insoluble dietary fibers. Examples thereof include, but are not limited to, common bean, scarlet runner bean, mottled kidney bean, soybeans (particularly green soybean), peas (green pea, yellow pea and white pea), pigeon pea, mug bean, black-eyed pea, adzuki bean, broad bean, soybean, black bean, chickpea, lentil bean, lentils, peanuts, Lupinus bean, grass pea, locust bean, coffee bean, and cacao bean. Of these, soybean (particularly green soybean), pea (particularly green pea), black bean and the like are preferable, and pea (green pea, yellow pea and white pea), chickpea, common bean, broad bean and mug bean are particularly preferable. The green soybean is obtained by harvesting immature soybeans together with pods without drying before harvesting, and the bean has a green appearance. For the inedible part, soybeans which are not dried before harvesting are preferable to soybeans dried to the extent that their color changes before harvesting, from the viewpoint of nutritional value, and particularly when the inedible part is used, it is preferable to use green soybeans.

The pulse is preferably one containing a predetermined amount or more of starch because a pulse having a low starch content (e.g. soybean) needs the supply of additional starch. Specifically, it is preferable to use a pulse having a starch content of normally 3 mass% or more, particularly 6 mass% or more, further 10 mass% or more, in terms of dry mass. The gelatinization degree of the pulse is preferably a predetermined value or more from the viewpoint of moldability of the composition. Specifically, the gelatinization degree of the pulse in the present invention is preferably, normally 30% or more, particularly 40% or more, further 50% or more, particularly 60% or more, particularly 70% or more. The upper limit of the gelatinization degree is not particularly limited, and an excessively high gelatinization degree may cause the starch to decompose, so that the composition is sticky and thus has unfavorable quality. Therefore, the upper limit of the gelatinization degree is preferably 99% or less, particularly 97% or less, further 95% or less. In the present invention, the gelatinization degree is measured by the glucoamylase second method.

Here, unless otherwise specified, the "dry mass" in the present invention refers to a remainder mass obtained by removing the content of moisture calculated from the "moisture content" described later from the mass of the whole food.

The nut may be of any type as long as its edible part and/or inedible part contains insoluble dietary fibers. Examples thereof include, but are not limited to, almond, kemp, linseed, perilla, cashew but, pumpkinseed, Japanese nutmeg, ginkgo nut, chestnut, walnut, poppy, coconut, sesame, chinquapin, Japanese horse-chestnut, lotus fruit, water chestnut, pistachio, sunflower seed, brazil nut, hazelnut, pecan, macadamia nut, pine, and peanut. Of these, almond, cashew nut, pumpkinseed, macadamia nut, pistachio, hazelnut, coconut and the like are preferable, and almond, cashew nut, pumpkinseed and hazelnut are further preferable.

The vegetable may be of any type as long as its edible part and/or inedible part contains insoluble dietary fibers. Examples thereof include, but are not limited to, artichoke, chives, ashitaba (Angelia keiskei), asparagus, aloe, cucurbitaceous plant, green bean, udo, bean sprouts, podded pea, snap pea, gumbo, turnip, pumpkin, leaf mustard, cauliflower, chrysanthemum, cabbage, cucumber, Alpine leek, water spinach, watercress, arrowhead, kale, burdock, Japanese mustard spinach, zha cai, green pepper, beefsteak plant, black-eyed pea, crown daisy, ginger, stem of taro, sugukina (Brassica rapa var. neosuguki), courgetti, cicely, celery, tatsoi, radish, mustard greens, bamboo shoot, onion, chicory, qing-geng-cai, red pepper, tomato, eggplant, Brassica flower, bitter cucumber, garlic chive, carrot, common rape, napa cabbage, pak choi, basil, parsley, beet (beet root), bell pepper, sweet coltsfoot, broccoli, sponge cucumber, spinach, horseradish, potherb mustard, honewort, mioga ginger, bean sprouts, cucumber, mulukhiya, lily bulb, mugwort, Japanese leek, arugula, rhubarb, lettuce, lotus root, scallion, Japanese horseradish, bracken, and herbs (e.g. coriander, sage, thyme, basil, oregano, rosemary, mint, lemongrass and dill). Of these, carrot, pumpkin, cabbage, kale, paprika, beet (beet root), broccoli, spinach, onion, burdock, lotus root, tomato and the like are preferable.

The fruit may be of any type as long as its edible part and/or inedible part contains insoluble dietary fibers. Examples thereof include, but are not limited to, acerola, avocado, apricot, strawberry, fig, Japanese apricot, citruses (e.g. Citrus Iyo, Citrus Unshiu, orange, grapefruit, lime and lemon), olive, Japanese persimmon, kiwi, guava, coconut, pomegranate, water melon, prune, cherries (e.g. sweet cherry and black cherry), jujube, pineapple, haskap, banana, papaya, loquat, grape, berries (e.g. blueberry and raspberry), mango, mangosteen, melon, peach, and apple. Of these, avocado, strawberry, berry, citruses, mango, pineapple, grape, apple and the like are preferable, and in particular, citruses, mango and pineapple are preferable.

The mushroom may be of any type as long as its edible part and/or inedible part contains insoluble dietary fibers. Examples thereof include, but are not limited to, shiitake mushroom, matsutake mushroom, cloud ear mushroom, maitake mushroom, bracket fungus, blue oyster mushroom, king oyster mushroom, winter mushroom, brown beech mushroom, honey mushroom, mushroom, nameko mushroom, Suillus bovinus, Lasktarius hatsudake, and tawny milkcap mushroom.

Of the above-enumerated edible plants, one or more selected from the group consisting of paprika, beet, corn, carrot, pumpkin, cabbage, pea, chickpea, kidney bean, broad bean, mug bean, lotus beet, burdock, chickpea, rice and potato are preferable from the viewpoint of markedly exhibiting the effect of the present invention.

In addition, among the edible plants, at least a pulse is preferably contained, and it is more preferable to contain one or more pulses selected from the group consisting of Pisum, Phaseolus, Cajanus, Vigna, Vicia, Cicer and Lens plants. When a pulse of Vigna is used, the amount of the pulse used is more preferably 30% or less in the puffed food composition. Regarding a foodstuff in which a portion of the edible part (e.g. green soybean or green pea) is considered as a vegetable, whether the foodstuff is a pulse or not can be determined based on the state of the whole plant (e.g. soybean or pea) including the inedible part (e.g. pod).

The puffed food composition of the present invention preferably contains a seed coat of the pulse from the viewpoint of more markedly exhibiting the effect of the present invention. The seed coat of the pulse is not a pod containing a bean, but a coat having a membrane-like structure and covering the surface layer of a bean itself. The seed coat of the pulse can be separated from the pulse with a general bean coat removing machine etc. For the seed coat of the pulse, a pulse with a seed coat may be used, or a seed coat separated from a pulse may be used.

The puffed food composition of the present invention preferably contains the inedible part of the edible plant. In the present invention, the "inedible part" of the edible plant refers to a part of an edible plant which is normally unsuitable for eating/drinking, or a part which is disposed in normal dietary habits, and the "edible part" refers to a part remaining after removal of the disposal part (inedible part) from the whole edible plant. Particularly in the case of edible plants containing a thick dietary fiber layer, trichome or the like, parts containing a thick dietary fiber layer, trichome or the like are poor in edibility and compatibility with other foods, and have been mostly disposed without being used for eating heretofore, and in the present invention, such inedible parts containing a thick dietary fiber layer, trichome or the like can be preferably used.

In the edible plant for use in the present invention, the edible part and the inedible part may be derived from mutually different types of edible plants, and from the viewpoint of uniformity of taste, the edible part and the inedible part derived from the same type of edible plants are preferably contained. Further, the edible part and the inedible part derived from the same individual edible plant are preferably contained. That is, by using a portion or the whole of the edible part and a portion or the whole of the inedible part derived from the same individual edible plant, such edible plant can be utilized without being wasted, and the inedible part can be eaten in a tasty way because the inedible part has an intense characteristic flavor inherent in the edible plant.

Examples of the inedible part of the edible plant include peels, seeds, cores and squeezed residues of the various edible plants. In particular, although not limited to these, peels, seeds, cores, squeezed residues and the like of corn (particularly sweet corn), paprika, pumpkin, beet (beet root), broccoli, spinach, carrot, kale, soybean (particularly green soybean), pea (particularly green pea), broad bean, tomato, rice, onion, cabbage, apple, grape, sugar cane and citruses (e.g. orange, Citrus Unshiu and citron), among others, can be preferably used in the present invention because they are abundant in nutrients. Specific examples of the inedible part of the edible plant include, but are not limited to, bracts, pistils and hobs (cores) of corns (particularly sweet corns), seeds and calyxes of paprikas, seeds and piths of pumpkins, peels of beets (beet roots), stems and leaves of broccolis, bases of spinaches, root tips and leafstalk bases of carrots, leafstalk bases of kales, pods of soybeans (green soybeans), pods of peas (green peas), seed coats and pods of broad beans, peels and both ends of sweet potatoes, calyxes of tomatoes, chaffs of rice (unhulled rice), peels (bracts), bottom slabs and heads of onions, cores of cabbages, cores of apples, fruit peels and seeds of grapes, squeezed residues of sugar canes, and peels, seeds and piths of citruses (e.g. oranges, Citrus Unshiu and citrons). Of these, hobs (cores) of corns, pods of peas (green peas), leafstalk bases of carrots, seeds or piths of pumpkins, cores of cabbages, leafstalk bases of kales, both ends of sweet potatoes, seeds or calyxes of paprikas, peels of beets (beet roots), stems and leaves of broccolis, bases of spinaches, peels (bracts), bottom slabs or heads of onions and calyxes of tomatoes are preferable. Preferably, ingredients harmful to the human body are not contained to the degree that the human body is affected.

The site and the proportion of the inedible part in the edible plant for use in the present invention can be naturally understood by those skilled in the art who handle the food and processed food products. For example, the "removed portion" and the "refuse" described in "the Standard Tables of Food Composition in Japan, 2015, (Seventh Revised Version)" are referred to, and can be considered as the site and the proportion of the inedible part, respectively. Table 1 below lists examples of edible plants and the "removed portion" (disposal part) and the "refuse" (wastage rate) described in "the Standard Tables of Food Composition in Japan, 2015, (Seventh Revised Version)" (i.e. the site and the proportion of the inedible part) for the edible plants.

[Table 1]

| Edible plant | Site of inedible part (disposal part) | Proportion of inedible part (wastage rate) |
|---|---|---|
| Vegetables/green soybean/raw | Pod | 45% |
| Vegetables/(maize)/sweet corn/immature seed, raw | Bract, pistil and hob | 50% |
| vegetables/(pumpkin)/Japanese pumpkin/ fruit, raw | Pith, seed and both ends | 9% |
| Vegetables/(bell pepper)/red bell pepper/ fruit, raw (paprika) | Calyx, core and seed | 10% |
| Vegetables/beet/root, raw | Root tip, peel and leafstalk | 10% |
| Vegetables/broccoli/anthotaxis, raw | Stem and leaf | 50% |
| Vegetables/(tomato)/tomato/fruit, raw | Calyx | 3% |
| Vegetables/(cabbage)/cabbage/head leaf, raw | Core | 15% |
| Vegetables/spinach/leaf, raw | Base | 10% |
| Vegetables/kale/leaf, raw | Leafstalk base | 3% |
| Vegetables/(pea)/green pea/raw | Pod | 55% |
| Vegetables/broad bean/immature bean/raw | seed coat, pod | 80% |
| Vegetables/(carrot)/root, with peel, raw | Root tip and leafstalk base | 3% |

From the viewpoint of exhibiting the effect of the present invention, the lower limit of the proportion of the inedible part of the edible plant with respect to the puffed food composition is preferably 1 mass% or more in terms of dry mass. The lower limit is preferably, particularly 2 mass% or more, further 3 mass% or more, further 5 mass% or more, particularly 8 mass% or more. The upper limit is not particularly limited, and is preferably 90 mass% or less, particularly 80 mass% or less, particularly 70 mass% or less.

The puffed food composition in the present invention contains the edible plant, and from the viewpoint of exhibiting the effect of the present invention, the content thereof, as a ratio to the puffed food composition, is preferably 10 mass% or more, more preferably 30 mass% or more, still preferably 50 mass% or more, particularly preferably 70 mass% or more in terms of dry mass. The upper limit is not particularly limited, and is preferably 100 mass% or less in terms of dry mass. Here, as described above, the "dry mass" in the present invention refers to a remainder mass obtained by removing the content of moisture calculated from the "moisture content" from the mass of the whole puffed food composition, and the "moisture content" can be measured by the following method.

In accordance with the Standard Tables of Food Composition in Japan, 2015, (Seventh Revised Version), the moisture content can be measured in terms of water content based on dry mass by applying heat to 90°C by using a method of heat drying under reduced pressure. Specifically, an appropriate amount of a sample is placed in a scale container previously adjusted to a constant weight (W0) and is measured (W1). Under ordinary pressure, the scale container with the lid removed or the aperture open is put in an electric dryer that enables a constant temperature and reduced pressure, the electric dryer being adjusted to a predetermined temperature (more specifically, 90°C). The door is closed, the vacuum pump is operated, and drying is performed at a predetermined degree of reduced pressure for a certain period of time. The vacuum pump is stopped, the pressure is returned to ordinary pressure by sending dry air, the scale container is taken out, the lid is put on the container, and the container is allowed to cool in a desiccator, and weighed (W2). This procedure is repeated, and the moisture content (mass%) is determined by the following equation.

$$\text{Moisture (mass\%)} = (W1 - W2)/(W2 - W0) \times 100$$

wherein W0 represents the mass (g) of the scale container adjusted to constant weight, W1 represents the mass (g) of the scale container containing a sample before drying, and W2 represents the mass (g) of the scale container containing a sample after drying.

(Insoluble Dietary Fiber)

In the present invention, the "dietary fiber" is a general term for hardly digestible ingredients in foods which are not digested with human digestive enzymes. In the present invention, the "insoluble dietary fiber" refers to a dietary fiber which is water-insoluble. Examples of the insoluble dietary fiber include, but are not limited to, lignin, cellulose, hemicellulose, chitin, and chitosan. Puffed food compositions containing lignin, in particular, acid-soluble lignin, among insoluble dietary fibers, are preferable because by applying the present invention, an effect of producing crispy texture without making the puffed food composition excessively hard can be obtained.

The puffed food composition of the present invention contains insoluble dietary fibers at a certain content percentage or more. Specifically, the lower limit of the content percentage of insoluble dietary fibers in the puffed food composition of the present invention is 3 mass% or more. The lower limit is preferably, particularly 4 mass% or more, further 5 mass% or more, further 6 mass% or more, further 7 mass% or more, further 8 mass% or more, further 9 mass% or more, particularly 10 mass% or more. The content percentage of insoluble dietary fibers is preferably the lower limit or more from the viewpoint of suppressing sticking to the teeth during eating. On the other hand, the upper limit of the content percentage is not particularly limited, and may be normally 50 mass% or less, and is preferably, particularly 40 mass% or less, particularly 30 mass% or less, from the viewpoint of good texture (crispy and not excessively hard).

The puffed food composition of the present invention contains insoluble dietary fibers derived from at least one or more edible plants. The puffed food composition of the present invention may contain, in addition thereto, insoluble dietary fibers derived from materials other than foodstuffs. It is more preferable that more than half of the contained insoluble dietary fibers be derived from edible plants blended in the composition, and it is more preferable that all of the contained insoluble dietary fibers be derived from edible plants blended in the composition. When the puffed food composition of the present invention contains insoluble dietary fibers derived from materials other than edible plants, the materials are not limited. For example, they may be materials derived from various natural materials other than edible plants which contain insoluble dietary fibers; synthesized materials; or mixtures of the former materials with the latter materials. When insoluble dietary fibers derived from natural materials are used, insoluble dietary fibers contained in one or more natural materials may be isolated and purified, or natural materials containing insoluble dietary fibers may be used directly.

In the present invention, the method for measuring the content of insoluble dietary fibers in the puffed food composition is carried out in accordance with the method described in "Food Labeling Standards" (Cabinet Office Ordinance No. 10, 2015) and "the Standard Tables of Food Composition in Japan, 2015, (Seventh Revised Version) Analysis Manual" using a modified Prosky method.


(Starch)

The puffed food composition of the present invention contains starch at a predetermined proportion or more, and thus exhibits the effect of the present invention of exhibiting a good puffing property as a puffed food composition and crispy texture. The reason for this is unknown, and protein and insoluble dietary fibers may interact with starch to form a network structure, resulting in exhibition of the effect of the present invention.

The content of starch in the puffed food composition of the present invention is normally 5 mass% or more, preferably 7 mass% or more, further preferably 8 mass% or more, further preferably 10 mass% or more, further preferably 11 mass% or more, further preferably 13 mass% or more, particularly preferably 15 mass% or more, in terms of dry mass. On the other hand, the upper limit of the starch content is not particularly limited, and is normally 60 mass% or less, preferably 50 mass% or less, further preferably 40 mass% or less, in terms of dry mass, in the puffed food composition of the present invention.

The gelatinization degree of starch in the composition of the present invention is preferably a predetermined value or more from the viewpoint of crispy texture of the composition. Specifically, the gelatinization degree of starch in the composition of the present invention is preferably, normally 30% or more, particularly 40% or more, further 50% or more, particularly 60% or more, particularly 70% or more. The upper limit of the gelatinization degree is not particularly limited, and an excessively high gelatinization degree may cause the starch to decompose, so that the composition is sticky and thus has unpreferred quality. Therefore, the upper limit of the gelatinization degree is preferably 99% or less, particularly 97% or less, further 95% or less. In the present invention, the gelatinization degree of the composition is measured by the glucoamylase second method.

In the present invention, the proportion of purified starch with respect to the total starch content of the puffed food composition is preferably 50 mass% or less, particularly 40 mass% or less, further 40 mass% or less, further 30 mass% or less, further 20 mass% or less, further 10 mass% or less, in terms of dry mass, and it is particularly preferable no purified starch be used, because purified starch loses minute amounts of nutritional ingredients etc. through the production process thereof. The purified starch is not particularly limited, and examples thereof include purified raw starch derived from edible plants, and starch obtained by processing the purified raw starch. In particular, the content of purified starch derived from one or more selected from the group consisting of corn, potato, tapioca and dogtooth violet starch is preferably the above-specified amount or less.

Further, in the present invention, the proportion of pulse-derived starch with respect to the total starch content of the puffed food composition is preferably 30 mass% or more, more preferably 50 mass% or more, further preferably 70 mass% or more, in terms of dry mass. The upper limit is not particularly limited, and may be 100 mass%.

In addition, in the present invention, the proportion of wheat-derived starch with respect to the total starch content of the puffed food composition is preferably 50 mass% or less, more preferably 30 mass% or less, further preferably 10 mass% or less, in terms of dry mass. The lower limit is not particularly limited, and may be 0 mass%.

The starch content is measured in accordance with the method described in "AOAC996.11" using a method including performing 80% ethanol extraction treatment to remove soluble carbohydrates (e.g. glucose, maltose and maltodextrin) which affect measured values.

(Proteins)

In the present invention, proteins are contained at a predetermined proportion or more, and thus the effect of the present invention of suppressing astringent taste of insoluble dietary fibers is exhibited. The reason for this is unknown, and proteins may interact with insoluble dietary fibers and starch to form a network structure, resulting in exhibition of the effect of the present invention.

The content of proteins in the puffed food composition is normally 4 mass% or more, preferably 5 mass% or more, further preferably 6 mass% or more, further preferably 7 mass% or more, further preferably 8 mass% or more, further preferably 9 mass% or more, particularly preferably 10 mass% or more, in terms of dry mass. On the other hand, the upper limit of the protein content is not particularly limited, and is preferably, normally 20 mass% or less, particularly 15 mass% or less. Here, the proteins contained in the puffed food composition of the present invention are preferably plant proteins.

The method for measuring the content of proteins in the puffed food composition of the present invention is carried out in accordance with the method described in "the Standard Tables of Food Composition in Japan, 2015, (Seventh Revised Version) Analysis Manual" using a Kjeldahl method-nitrogen-to-protein conversion method.

(Particle Size-Related Characteristics)

The puffed food composition of the present invention contains insoluble dietary fibers in the form of fine particles. Such fine particles may be formed only from one or more insoluble dietary fibers, or may be formed from one or more insoluble dietary fibers and one or more other ingredients.

In the puffed food composition of the present invention, at least some of the fine particles including insoluble dietary fibers aggregate to form a complex which can be crushed by disturbance of a dispersion liquid of the puffed food composition. The puffed food composition of the present invention contains insoluble dietary fibers in the form of such a complex, so that crispy texture is imparted, and sticking to the teeth is suppressed. In the present invention, ultrasonication of the dispersion liquid of the puffed food composition is taken as a typical example of external disturbance for crushing the fine particle complex unless otherwise specified. In the present invention, the "ultrasonication" refers to treatment in which an ultrasonic wave with a frequency of 40 kHz is applied to a measurement sample at an output of 40 W for 3 minutes unless otherwise specified.

The puffed food composition of the present invention contains a fine particle complex including insoluble dietary fibers, and the values of various physical properties such as a particle size for such fine particles and complex before and after application of disturbance to the dispersion liquid of the puffed food composition are adjusted within ranges described later, so that crispy texture is imparted, and sticking to the teeth is suppressed. The reason for this is unknown, and it is considered that a complex with a characteristic shape which looks like as if a plurality of dietary fibers were twisted and gathered may be formed in the puffed food composition, and exhibit various effects.

In particular, the puffed food composition of the present invention contains a large number of fine particle complexes which firmly bind so that disintegration relatively hardly occurs when disturbance is not applied to the dispersion liquid of the composition, i.e. before ultrasonication is performed, whereas some or all of the fine particle complexes are disintegrated into single fine particles when disturbance is applied, i.e. after ultrasonication is performed. Thus, before and after the ultrasonication, various parameters related to the particle size change depending on the degree of the disintegration.

The "particle size" in the present invention refers to that measured on a volume basis unless otherwise specified. The "particle" in the present invention conceptually includes not only single fine particles but also fine particle complexes formed by aggregation of the fine particles unless otherwise specified.

(Characteristics Related to 60% Integrated Diameter in Particle Sizes (d60))

In the puffed food composition of the present invention, the 60% integrated diameter in the particle sizes of particles (hereinafter, referred to as "particle size d60" as appropriate) in the dispersion liquid of the puffed food composition after disturbance of the dispersion liquid, i.e. after ultrasonication, is adjusted within a predetermined range.

By adjusting the d60 in particle sizes after ultrasonication within a predetermined range, a shape of the composition held in the hand can be maintained during eating, and crispy texture can be felt. When the particle size d60 after ultrasonication is adjusted within a predetermined range, the composition is not excessively hard, and can be adjusted to good texture. Specifically, the lower limit of the particle size d60 after ultrasonication is 0.3 $\mu$m or more. The lower limit is preferably, particularly 0.5 $\mu$m or more, further 1 $\mu$m or more, further 5 $\mu$m or more, further 10 $\mu$m or more, further 20 $\mu$m or more, further 50 $\mu$m or more, particularly 90 $\mu$m or more. On the other hand, the upper limit of the particle size d60 after ultrasonication is 1,000 $\mu$m or less. The upper limit is preferably, particularly 900 $\mu$m or less, further 800 $\mu$m or less, further 700 $\mu$m or less, further 600 $\mu$m or less, further 500 $\mu$m or less, further 400 $\mu$m or less, particularly 300 $\mu$m or less. The particle size d60 of the puffed food composition is defined as a particle size at which the ratio between the proportion of the cumulative value of particle frequency in % on the larger side and the proportion of the cumulative value of particle frequency in % on the smaller side is 40:60 when the particle size distribution of the puffed food composition is divided into two at the particle size.

(Characteristics Related to Maximum particle size)

Further, when the puffed food composition of the present invention contains particles with the maximum particle size within a predetermined range before disturbance of the dispersion liquid of the puffed food composition, i.e. before ultrasonication, the composition is not excessively hard, has fluffy texture, and can be made less likely to stick to the teeth. Specifically, the lower limit of the maximum particle size of particles in the dispersion liquid before disturbance of the dispersion liquid of the puffed food composition of the present invention, i.e. before ultrasonication, is 200 $\mu$m or more. The lower limit is preferably, particularly 300 $\mu$m or more, further 400 $\mu$m or more, further 500 $\mu$m or more, further 700 $\mu$m or more, further 900 $\mu$m or more, particularly 1,100 $\mu$m or more. On the other hand, the upper limit of the maximum particle size of particles in the dispersion liquid before disturbance of the dispersion liquid of the puffed food composition of the present invention, i.e. before ultrasonication, is not particularly limited, and is preferably 2,000 $\mu$m or less, particularly preferably 1,700 $\mu$m or less.

(Characteristics Related to Difference in Integrated Frequency in % of Particle Size Before and After Ultrasonication)

The effect of the present invention is more markedly exhibited when the difference in integrated frequency in % in particle sizes of particles of the 2 mass% dispersion liquid before and after ultrasonication of the dispersion liquid of the puffed food composition (in the present invention, a value obtained by subtracting the integrated frequency in % of particles having a particle size of 20 $\mu$m or more and 2,000 $\mu$m or less in the dispersion liquid before disturbance, i.e. before ultrasonication, from the integrated frequency in % of particles having a particle size of 20 $\mu$m or more and 2,000 $\mu$m or less in the dispersion liquid after disturbance, i.e. after ultrasonication) is within a certain range in the puffed food composition of the present invention. That is, the difference in integrated frequency in % of particles having a particle size of 20 $\mu$m or more and 2,000 $\mu$m or less in the dispersion liquid of the puffed food composition before and after ultrasonication is preferably 25% or less (which means 0% or more and 25% or less) because sufficiently tough complexes are formed, and the effect of the present invention is more markedly exhibited. The upper limit of the difference is more preferably 23% or less. In particular, it is more preferable that the upper limit be 20% or less, further 18% or less, further 14% or less, further 9% or less, further 6% or less, further 4% or less, particularly 2% or less. The lower limit of the difference is not particularly limited, and may be 0%. Preferably, the integrated frequency in % of particles having a particle size of 20 $\mu$m or more and 2,000 $\mu$m or less in the 2 mass% water dispersion liquid of the puffed food composition before ultrasonication is preferably 1% or more. More preferably, the integrated frequency in % of particles having a particle size of 20 $\mu$m or more and 2,000 $\mu$m or less in the 2 mass% water dispersion liquid of the puffed food composition after ultrasonication is preferably 1% or more.

(Measurement Method Related to Particle Size)

The particle size of particles in the dispersion liquid after disturbance of the dispersion liquid of the puffed food composition of the present invention, i.e. after ultrasonication, is measured under the following conditions. First, as a solvent during measurement, distilled water which is unlikely to affect the structure of a sample during measurement of the puffed food composition as described later is used. That is, the dispersion liquid of the puffed food composition is preferably a water dispersion liquid of the puffed food composition. The laser diffraction particle size distribution analyzer used for the measurement is a laser diffraction particle size distribution analyzer having a measurement range of at least from 0.02 μm to 2,000 μm by a laser diffraction scattering method. For example, Microtrac MT3300 EXII system of MicrotracBEL Corporation is used, and as the measurement application software, for example, DMS2 (Data Management System version 2, MicrotracBEL Corporation) is used. When the measurement apparatus and the software above are used, measurement is performed by pressing down the washing button of the software to implement washing, then pressing down the set zero button of the software to implement zero adjustment, and directly feeding a sample by sample loading until the concentration of the sample falls within an appropriate range. For a sample before disturbance, i.e. a sample which has not been subjected to ultrasonication, laser diffraction is performed at a flow rate of 60% for a measurement time of 10 seconds immediately after adjustment of the concentration of the sample within an appropriate range during sample loading performed two times after feeding of the sample. The result is used as the measured value. On the other hand, when a sample after disturbance, i.e. a sample subjected to ultrasonication, is measured, ultrasonication is performed using the above-described measuring apparatus after feeding of the sample, and subsequently, measurement is performed. In this case, a sample which has not been subjected to ultrasonication is fed, the concentration is adjusted within an appropriate range by sample loading, and the ultrasonication button of the software is then pressed down to perform ultrasonication. Subsequently, defoaming is performed three times, and then sample loading is performed again. Immediately after verification that the concentration is still within the appropriate range, laser diffraction is performed at a flow rate of 60% for a measurement time of 10 seconds, and the result can be used as the measured value. The parameters at the time of measurement are, for example, distribution display: volume, particle refractive index: 1.60, solvent refractive index: 1.333, upper limit of measurement (μm) = 2,000.00 μm, and lower limit of measurement (μm) = 0.021 μm

Unless otherwise specified, a solution (2 mass% water dispersion liquid) obtained by immersing 1 g of the puffed food composition sample in 50 g of distilled water at about 80°C, leaving the sample to stand for about 5 minutes, then sufficiently performing stirring with a spatula to suspend the sample, and causing the resulting suspension to pass through a new JIS 7.5-mesh sieve with an aperture of 2.36 mm and a wire diameter of 1.0 mm is used as a sample for measuring the particle size of particles in the dispersion liquid of the puffed food composition of the present invention.

In determination of various particle sizes of particles in the dispersion liquid of the puffed food composition in the present invention, the particle size distribution at each channel (CH) is measured, and the particle sizes are determined using the particle size at each measurement channel shown in Table 2 below as the standard. Specifically, the particle frequency in % of each channel (which is also referred to as "particle frequency in % for XX channel") is determined by measuring the frequency of particles that are not larger than the particle size specified for each of the channels shown in Table 2 below and larger than the particle size (in the channel largest in the measurement range, measurement lower limit of particle size) specified for the channel of a larger number by one for each channel shown in Table 2 below and using the total frequency of all channels within the measurement range as the denominator. For example, the particle frequency in % of channel 1 represents the frequency in % of particles having sizes of 2,000.00 μm or less and higher than 1,826.00 μm. In particular, the maximum particle size is determined as the particle size of a channel which is the largest in particle size among channels found to have a particle frequency in % from the result obtained by measuring the particle frequency in % at each of 132 channels in Table 2 below. In other words, when the maximum particle size of particles in the dispersion liquid of the puffed food composition is measured with a laser diffraction particle size distribution analyzer in the present invention, the condition for the measurement is that distilled water is used as a measurement solvent, and the particle size of a target with a size between a measurement upper limit of 2,000.00 μm and a measurement lower limit of 0.021 μm is measured immediately after feeding of the sample.

[Table 2]

| Channel | Particle size (μm) | Channel | Particle size (μm) | Channel | Particle size (μm) | Channel | Particle size (μm) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |

(continued)

| Channel | Particle size ($\mu$m) | Channel | Particle size ($\mu$m) | Channel | Particle size ($\mu$m) | Channel | Particle size ($\mu$m) |
|---|---|---|---|---|---|---|---|
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

(Minimum differential value of Stress Value at Each Deformation rate in %)

The differential value in the present invention refers to a proportion determined by placing the composition on a stage so as to maximize the contact area with the stage in measurement of stress with a texture analyzer and dividing the difference in value of stress on a descending disc-like plunger ($kN/m^2$) by the deformation rate difference (%). More specifically, the projection area when using the texture analyzer, the surface of the puffed food composition at a product temperature of 20°C is pressed at a descending speed of 1 mm/sec to a deformation rate of 60% (or 40%) with a disc-like plunger sized to prevent protrusion of the composition on the stage, and the composition on the stage is observed in a vertical direction from above is taken as the contact area, stress per unit contact area ($kN/m^2$) is continuously measured at intervals of 0.02 seconds, and the stress value difference ($kN/m^2$) between the deformation rates is divided by the deformation rate difference (%) to determine the differential value ($kN/m^2$%) at each deformation rate (%). The differential value is calculated by measuring the stress value at intervals of 0.02 seconds. Specifically, for the measured value at arbitrary measurement time T1 second (deformation rate Xi% and stress P1 ($kN/m^2$)) and the measured value at T1 + 0.02 seconds (deformation rate Xii% and stress P2 ($kN/m^2$)), the differential value at deformation rate Xi% (measurement time T1 seconds) can be measured by dividing the stress value difference P2 - P1 ($kN/m^2$) by deformation rate difference Xii - Xi% ("method 1" described above). The maximum stress at a deformation rate of less than 60% is determined as the maximum value of stress obtained in the same manner as in the measurement of the minimum differential value. The arithmetic mean value of ten measurements made for each composition by the above-described method can be employed as the measured value for each composition.

Therefore, the state in which the differential value is negative means that the stress on the plunger tends to decrease (at least temporarily) as the plunger descends. This characteristic is found in a puffed food composition having a discontinuous structure from near the surface of the puffed food composition toward the inside of the puffed food composition.

That is, the puffed food composition in which the minimum differential value at a deformation rate of less than 60% is -100 $kN/m^2$% or less is a puffed food composition having discontinuous strength near the surface of the puffed food composition and inside the puffed food composition, and is useful in the present invention for achieving the purpose of obtaining a puffed food composition which has crispy texture and is unlikely to stick to the teeth. The upper limit of the minimum differential value at a deformation rate of less than 60% is preferably, particularly less than -100 $kN/m^2$%, further less than -200 $kN/m^2$%, further less than -300 $kN/m^2$%, further less than -400 $kN/m^2$%, further less than -500 $kN/m^2$%, further less than -600 $kN/m^2$%, further less than -700 $kN/m^2$%, further less than -800 $kN/m^2$%, further less than -900 $kN/m^2$%, particularly less than -950 $kN/m^2$%. On the other hand, the lower limit is not particularly limited, and is preferably -1,400 $kN/m^2$% or more, particularly 1,200 $kN/m^2$% or more, particularly - 1,000 $kN/m^2$% or more.

Further, it is preferable that the minimum differential value at a deformation rate of less than 40% be adjusted within a certain range in the puffed food composition of the present invention because the effect of the present invention is more markedly exhibited. Specifically, the minimum differential value at a deformation rate of less than 40% is preferably -50 $kN/m^2$% or less, and the upper limit of the minimum differential value at a deformation rate of less than 40% is preferably, particularly -100 $kN/m^2$% or less, further less than -100 $kN/m^2$%, further less than -200 $kN/m^2$%, further less than -300 $kN/m^2$%, further less than -400 $kN/m^2$%, further less than -500 $kN/m^2$%, particularly less than -600 $kN/m^2$%. On the other hand, the lower limit is preferably -1,400 $kN/m^2$% or more, particularly -1,000 $kN/m^2$% or more, particularly -900 $kN/m^2$% or more.

The minimum differential value at a deformation rate of less than 60% is the smallest differential value obtained when the differential value is continuously measured while the plunger is moved in the vertical direction to a distance of 60% (deformation rate of 60%) from the upper part of the puffed food composition toward the lower part (inside) of the puffed food composition, where the surface of the lower part (bottom surface) and the surface of the upper part (top surface) of the puffed food composition in the vertical direction during measurement are set to 100% and 0%, respectively.

Similarly, the minimum differential value at a deformation rate of less than 40% is the smallest differential value obtained when the differential value is continuously measured while the plunger is moved in the vertical direction to a distance of 40% (deformation rate of 40%) from the upper part of the puffed food composition toward the lower part (inside) of the puffed food composition, where the surface of the lower part (bottom surface) and the surface of the upper part (top surface) of the puffed food composition in the vertical direction during measurement are set to 100% and 0%, respectively.

The surface of the puffed food composition in the present invention refers to a region which directly contacts the outside air when the outer shape of the puffed food composition is considered as a continuous surface. The region includes the lower surface of the puffed food composition in the vertical direction, and does not include the inner surfaces of pores formed by expansion of the surface and the inner part.

(Maximum Value of Stress at Each Deformation Rate in %)

A puffed food composition in which the maximum value of stress at a deformation rate of less than 60% is 300 $kN/m^2$ or more has a characteristic of being unlikely to stick to the teeth while being more likely to have a problem in that the puffed food composition does not have crispy texture. The present invention enables the puffed food composition to have crispy texture while having a characteristic of being unlikely to stick to the teeth and therefore a technique in the present invention is more useful. The lower limit of the maximum value of stress at a deformation rate of less than 60% is preferably, particularly 400 $kN/m^2$ or more, further 500 $kN/m^2$ or more, further 600 $kN/m^2$ or more, further 700 $kN/m^2$ or more, further 800 $kN/m^2$ or more, particularly 900 $kN/m^2$ or more. The upper limit is preferably 5,000 $kN/m^2$ or less, particularly 4,000 $kN/m^2$ or less, further 3,000 $kN/m^2$ or less, particularly 1,500 $kN/m^2$ or less.

Here, the maximum stress at a deformation rate of less than 60% refers to the maximum value of stress obtained in the same manner as in the measurement of the minimum differential value.

(Density)

In the present invention, the density refers to the mass per unit volume of the puffed food composition at a product temperature of 20°C. The density of the puffed food composition of the present invention is preferably 1.00 $g/cm^3$ or less from the viewpoint of crispy texture. The density is preferably, particularly 0.90 $g/cm^3$ or less, further 0.85 $g/cm^3$ or less, further 0.75 $g/cm^3$ or less, particularly 0.70 $g/cm^3$ or less. The lower limit is not particularly limited, and is preferably 0.04 $g/cm^3$ or more, particularly 0.05 $g/cm^3$ or more, further 0.08 $g/cm^3$ or more, 0.10 $g/cm^3$ or more, further 0.12 $g/cm^3$ or more, further 0.15 $g/cm^3$ or more, further 0.17 $g/cm^3$ or more, further 0.20 $g/cm^3$ or more, particularly 0.27 $g/cm^3$ or more from the viewpoint of keeping the form. The density of the puffed food composition can be determined by dividing the mass of the composition by the volume of an imaginary rectangular parallelepiped having the smallest volume among imaginary rectangular parallelepipeds in which the composition is inscribed.

(Additional Foodstuffs)

The puffed food composition of the present invention may contain, in addition to the above-described edible plants, additional foodstuffs. Specifically, the additional foodstuffs mentioned herein are foodstuffs and materials with a size larger than 2,000 $\mu$m (2 mm) which cannot be measured in laser diffraction particle size distribution analysis. Examples of such additional foodstuffs include plant foodstuffs, microbial foodstuffs and animal foodstuffs, and any of these may be used. These foodstuffs may be used alone or in an arbitrary combination of two or more thereof.

These foodstuffs may be used directly or may be used after various treatments (e.g. drying, heating, harshness removal, peeling, seed removal, ripening, salting, and pericarp processing).

The content of the additional foodstuffs can be appropriately set according to the types of the foodstuffs as long as the purpose of the present invention is not hindered.

(Additional Ingredients)

The puffed food composition of the present invention may contain, in addition to the above-described various ingredients, one or more additional ingredients. Examples of the additional ingredients include seasonings, fat/oil, food additives, nutritional ingredients, and binding agents.

Examples of the seasonings and food additives include soy sauce, soybean paste, alcohols, dietary salt, artificial sweeteners (e.g. sucralose, aspartame, saccharin and acesulfame potassium), minerals (e.g. zinc, potassium, calcium, chromium, serene, iron, copper, sodium, magnesium, manganese, iodine and phosphorus), flavors, spices, pH adjusters (e.g. sodium hydroxide, potassium hydroxide, lactic acid, citric acid, tartaric acid, malic acid and acetic acid), dextrin, cyclodextrin, antioxidants (e.g. tea extracts, green coffee bean extracts, chlorogenic acid, spice extracts, coffeic acid, rosemary extracts, rutin, quercetin, bayberry extracts and sesame extracts), emulsifiers (e.g. glycerin fatty acid esters, saponin, saccharose fatty acid esters and lecithin), colorants, thickening stabilizers, sugars (glucose, saccharose (sucrose), fructose, glucose syrup and high-fructose corn syrup), and sugar alcohols (xylitol, erythritol and maltitol).

It is particularly desirable that the puffed food composition of the present invention be substantially free of food additives (e.g. materials listed in "Table of Names of Food Additive Materials for Labeling" in Japan's Specifications and Standards for Additives (2011 edition) and used for food additives) from the viewpoint of providing quality satisfying health-conscious consumers. Specifically, the content of food additives in the puffed food composition of the present invention is preferably 5 mass% or less, more preferably, particularly 3 mass% or less, further 1 mass% or less, particularly substantially 0 mass% with respect to the whole puffed food composition. The content of seasonings can be appropriately set according to the types of the seasonings as long as the purpose of the present invention is not hindered.

The puffed food composition of the present invention may contain one or more kinds of fat/oil. When the composition contains two or more kinds of fat/oil, any combination may be employed at any proportion of the two or more kinds of fat/oil. Examples of the type of fat/oil include edible fat/oil, various fatty acids, and foods with the fat/oil or the fatty acids as raw materials, and edible fat/oil is preferably used. The edible fat/oil may be a fat/oil contained in the foodstuff, and it is preferable to add an edible fat/oil independent of the foodstuff because it is well blended with the foodstuff. When an edible fat/oil independent of the foodstuff is added, it is preferable that the amount of the edible fat/oil used independent of such foodstuff be adjusted so as to occupy 10 mass% or more, particularly 30 mass% or more, of the total fat/oil content of the puffed food composition. The "total fat/oil content" in the present invention refers to the mass proportion of all fat/oil in the puffed food composition (i.e. all fat/oil including not only fat/oil blended during preparation of the puffed food composition but also fat/oil contained in the food used as a raw material and other optional ingredients) with respect to the whole puffed food composition. The total fat/oil content is measured in accordance with the method described in "Food Labeling Standards" (Cabinet Office Ordinance No. 10, 2015) using a chloroform/methanol mixed liquid extraction method.

Specific examples of the edible fat/oil include sesame oil, rapeseed oil, high-oleic rapeseed oil, soybean oil, palm oil, cottonseed oil, corn oil, sunflower oil, high-oleic sunflower oil, safflower oil, olive oil, linseed oil, rice oil, camellia oil, perilla oil, flavor oil, coconut oil, grapeseed oil, peanut oil, almond oil, avocado oil, cacao butter, salad oil, canola oil or MCT (medium-chain triglyceride), diglyceride, hardened oil, ester-exchanged oil, and animal fat/oil such as milk oil and beef fat. In particular, liquid edible fat/oil such as sesame oil, olive oil, rapeseed oil, soybean oil, sunflower oil, rice oil, coconut oil and palm oil are preferable, and from the viewpoint of taste, olive oil, coconut oil and rapeseed oil are more preferable. Specific examples of the food with various fatty acids as raw materials include butter, margarine, shortening, fresh cream, and soymilk cream (e.g. "KOKURIMU" from Fuji Oil Co., Ltd. (registered trademark)).

Examples of the nutritional ingredient include vitamins (e.g. niacin, pantothenic acid. biotin, vitamin A, vitamin B1, vitamin B2, vitamin B6, vitamin B12, vitamin C, vitamin D, vitamin E, vitamin K and folic acid), animal proteins derived from livestock meat, milk, egg and the like, lipids (n-3-type fatty acids such as α-linolenic acid, EPA and DHA and n-6-type fatty acids such as linolic acid and arachidonic acid), dietary fibers, and functional ingredients such as polyphenol. The content of the nutritional ingredients can be appropriately set according to the types of the ingredients as long as the purpose of the present invention is not hindered.

Preferably, the puffed food composition of the present invention is substantially free of a binding agent. Examples of the binding agent include foodstuffs containing animal protein, such as egg and milk or extracts thereof, normal phosphates such as monosodium phosphate and disodium phosphate, and polymeric phosphates such as sodium polyphosphate and sodium metaphosphate. The puffed food composition of the present invention has the advantage that scattering during eating is suppressed even without using such a binding agent. Inhibition of use of such a binding agent is desirable from the viewpoint of providing quality satisfying health-conscious consumers. In particular, egg and/or milk are specific raw materials specified in "Food Labeling Standards" (Cabinet Office Ordinance No. 10, 2015), and are specified as allergens in foreign countries. Therefore, from the viewpoint of consumers who do not desire allergens, a configuration substantially free of egg or a configuration substantially free of milk is preferable, and a configuration substantially free of both egg and milk is most preferable. In this case, the term "substantially free of" means that an allergenically effective amount of the allergen is not contained, for example, a total protein such as a specific raw material subject to labeling in "Food Labeling Standards" (Cabinet Office Ordinance No. 10, 2015) in Japan is not contained.

Specifically, in the puffed food composition of the present invention, the content of ingredients derived from binding agents, particularly egg and/or milk, is preferably 5 mass% or less, more preferably, particularly 3 mass% or less, further 1 mass% or less, specifically substantially 0 mass%, with respect to the whole puffed food composition. In the present invention, examples of the ingredients derived from egg and/or milk include eggs and/or milks listed in Appended Table 1 in Appended Table 1 of "About Food Labeling Standards" (Digestion Foods List No. 139), Annex "Labeling on Foods Containing Allergens", specifically edible bird's eggs such as chicken egg, and eggs of ducks and quails, processed products of chicken egg, milks such as raw milk, cow milk and processed milk, milk products such as cream, butter, cheese, ice cream, condensed milk, milk powder, milk powder, cream powder, whey powder, fermented milk, lactic acid bacteria beverages and milk beverages, and foods with milk or milk products as raw materials.

Preferably, the puffed food composition of the present invention is substantially free of one or more ingredients selected from the group consisting of emulsifiers, colorants and thickening stabilizers which are so-called food additives (e.g. materials listed as "colorants", "thickening stabilizers" and "emulsifiers" in "Table of Names of Food Additive Materials for Labeling" in Japan's Specifications and Standards for Additives (2011 edition). Even without using such a colorant, thickening stabilizer, emulsifier or the like, the puffed food composition of the present invention has improved dough tightness, so that scattering during eating can be suppressed. From the viewpoint of providing quality satisfying health-conscious consumers, inhibition of use of such a colorant, thickening stabilizer or emulsifier is desirable.

From the viewpoint of providing quality satisfying health-conscious consumers, specifically, the content of one of the colorant, the thickening stabilizer and the emulsifier as a food additive in the puffed food composition of the present invention is preferably 5 mass% or less, more preferably, particularly 3 mass% or less, further 1 mass% or less, particularly substantially 0 mass%, with respect to the whole puffed food composition.

(Other Conditions)

Preferably, the puffed food composition of the present invention is not a preparation by cooking with oil in which the puffed food composition is deep-fried or fried in heated fat/oil, from the viewpoint of sticking to the teeth.

The puffed food composition of the present invention is preferably a preparation by an extruder from the viewpoint of simplifying the production process. The extruder will be described in detail in a method for producing a puffed food composition below.

[Method for Producing Puffed Food Composition]

The method for producing a puffed food composition of the present invention is not particularly limited, and any method can be used as long as a puffed food composition satisfying the above-described various requirements can be obtained. Examples of methods which can be employed include a method in which the pressure on the periphery of a pasty dough composition is rapidly reduced from the ordinary pressure condition to obtain a puffed food composition; and a method in which a pasty dough composition fermented by adding an expanding agent or adding microorganisms such as yeast if necessary is fired to expand bubbles in the dough composition, thereby obtaining a puffed food composition. In particular, by mixing the material for the puffed food composition of the present invention, e.g. an edible plant, with optional additional foodstuffs and additional ingredients to prepare a pasty dough composition, then kneading the mixture at a predetermined temperature or higher under a pressurized condition, and then reducing the pressure to ordinary pressure in a high-temperature state, the puffed food composition of the present invention can be efficiently produced.

More specific examples include a method for producing a puffed food composition containing an edible plant, the method including following steps (i) to (iii):

(i) preparing a pasty dough composition containing an edible plant and having an insoluble dietary fiber content of 3 mass% or more in terms of dry mass, a starch content of 5 mass% or more in terms of dry mass and a protein content of 4 mass% or more in terms of dry mass;
(ii) kneading the composition of (i) at a temperature of 100°C or higher under a pressurized condition; and
(iii) bringing the composition of (ii) back to ordinary pressure at a temperature of 100°C or higher.

(Step (i))

In the step (i), the edible plant is mixed with optional additional foodstuffs and other ingredients and adjustment is performed so that the contents of insoluble dietary fibers, starch and protein are within the above-described ranges.

In the present invention, edible plants subjected to drying treatment beforehand, i.e. dry foodstuffs, are preferably used as the edible plant and optional additional foodstuffs from the viewpoint of easy handling. As the method for drying the foodstuff, any method generally used for drying a food can be used. Examples thereof include solar drying, drying in shade, freeze-drying, air drying (e.g. hot-air drying, fluidized bed drying method, spray drying, drum drying and cold drying), press drying, drying under reduced pressure, microwave drying, and oil heat drying. Of these, methods by air drying (e.g. hot-air drying, fluidized bed drying method, spray drying, drum drying and cold drying) or freeze-drying are preferable because the degree of change in color tone and taste inherent in the foodstuff is small and odors from causes other than the food (e.g. burnt odor) can be controlled.

As the edible plant and optional additional foodstuffs, those ground beforehand may be used. The means for grinding treatment is not particularly limited, and the temperature and the pressure during treatment are arbitrary. Examples of the apparatus for grinding treatment include apparatuses, such as a blender, a mixer, a mill, a kneader, a grinder, a crusher, and an attritor, and any of these apparatuses may be used. Either dry grinding or wet grinding may be performed. The raw material such as an edible plant, and the specific configuration of insoluble dietary fibers, starch and protein are as described above.

(Step (ii))

In the step (ii), the pasty dough composition obtained from the step (i) is kneaded at a temperature of 100°C or higher under a pressurized condition. By kneading the pasty dough composition under a pressurized condition at a high temperature as mentioned above, formation of a complex of insoluble dietary fibers, starch, protein and the like is promoted, and characteristics are easily controlled to desired ones. This temperature is a preferably temperature which is high but does not cause the dough composition to burn.

The lower limit of the temperature during kneading is normally 100°C or higher, and preferably, particularly 105°C or higher, further 110°C or higher, particularly 115°C or higher. By setting the lower limit of the temperature during kneading within the above-described range, a puffed food composition which is not sticky and has crispy texture can be obtained. In particular, for pulses, the lower limit is preferably 140°C or higher. On the other hand, the upper limit of the temperature during kneading is normally 200°C or lower, and preferably, further 190°C or lower, further 180°C or lower, further 170°C or lower, further 165°C or lower, further 160°C or lower, particularly 155°C or lower. By setting the upper limit of the temperature during kneading within the above-described range, a puffed food composition which is not excessively hard and has crispy texture can be obtained.

The lower limit of the pressure during kneading is normally 0.1 MPa or more, preferably, further 0.3 MPa or more, further 0.5 MPa or more, further 1 MPa or more, further 2 MPa or more, further 3 MPa or more. On the other hand, the upper limit of the pressure during kneading may be appropriately determined according to requirements of pressure resistance of pressure equipment, and the like, and may be, for example, 50 MPa or less.

The kneading time may be appropriately determined from the temperature and the pressure of kneading, the size of a kneading vessel, and the like, and in general, the lower limit of the kneading time is normally 0.5 minutes or more, preferably 0.8 minutes or more, more preferably 1 minute or more, further preferably 2 minutes or more. On the other hand, the upper limit of the kneading time may be normally 60 minutes or less, preferably 30 minutes or less, further preferably 15 minutes or less.

(Step (iii))

In the step (iii), the composition after the step (ii) is brought back to ordinary pressure at a temperature of 100°C or higher. By decompressing the composition while maintaining a certain temperature or higher in this way, moisture in the composition is rapidly evaporated to facilitate the expansion of the composition.

The temperature and pressure conditions when the pressure is turned back to ordinary pressure are not particularly limited as long as expansion of the composition can be promoted, and normally, the temperature in step (iii) is preferably a temperature equal to or lower than the temperature in the step (ii), more preferably lower by 10°C or more than the temperature in the step (ii). The lower limit thereof is normally 100°C or higher, preferably, particularly 105°C or higher, further 110°C or higher, particularly 115°C or higher. Preferably, the pressure is reduced to approximately atmospheric pressure during temperature falling.

(Extruder)

By the above-described production method of the present invention, the puffed food composition of the present invention can be produced, and in the steps (i) to (iii), particularly in kneading treatment under a high-temperature condition (the step (ii) and the step (iii)), an extruder is preferably used. That is, when the step (ii) and the step (iii) are carried out using the extruder, normally it is unnecessary to control the pressure condition to fall within the above-described range, and the temperature condition can be efficiently adjusted and maintained within the above-described range. Thus, by using the extruder, the puffed food composition of the present invention can be efficiently and conveniently produced. The gelatinization degree in the step (i) is 10% or less, and the gelatinization degree of the composition after the step (iii) is 50% or more.

The type of the extruder is not particularly limited, and is preferably one that enables the treatments of addition of water, kneading, heating, cooling and extrusion molding to be performed in one unit. Specifically, any of a single screw extruder and a twin screw extruder can be used, and from the viewpoint of industrial productivity, a twin screw extrude is preferably used.

When the production method of the present invention is carried out with an extruder, the conditions are as follows.

In the step (i), a raw material to be used for preparation of a pasty dough composition is fed into the extruder, and mixed. Normally, a solid material such as a finely divided edible plant which is a raw material is first fed into the extruder, and subsequently, water is fed.

The retention time of the input raw material in the extruder (retention time in the barrel until the raw material is discharged through an outlet after it is fed into the barrel) may be appropriately adjusted with consideration given to the internal volume of the barrel, the internal pressure of the barrel and the like, and is not particularly limited. From the viewpoint of enhancing the effect of the present invention, the retention time is normally 0.5 minutes or more, preferably 0.8 minutes or more, more preferably 1 minute or more, further preferably 2 minutes or more, further preferably 3 minutes or more, and normally 60 minutes or less, preferably 30 minutes or less, further preferably 15 minutes or less.

The feed flow rate of the input raw material fed into the extruder is not particularly limited, and may be appropriately adjusted with consideration given to the internal volume of the barrel, the retention time, the internal pressure of the barrel, and the like. For example, the flow rate may be normally 0.06 kg/hr or more, preferably 0.1 kg/hr or more, more preferably 0.2 kg/hr or more, further preferably 0.3 kg/hr or more, and normally 1,000 kg/hr or less, preferably 800 kg/hr or less, more preferably 600 kg/hr or less, further preferably 400 kg/hr or less.

The amount of water fed into the extruder can be appropriately adjusted according to the physical properties of a desired pasty dough composition, and it is preferable that moisture be contained at 20 to 60 mass% with respect to the dry weight of solids such as finely divided edible plants (also referred to as a water content based on dry mass or a moisture content against powder (%)). If the moisture content against powder (%) is excessively small, operability in kneading may be deteriorated. If the moisture content against powder (%) is excessively large, it may be difficult to obtain crispy texture.

In the step (ii), the pasty dough composition is kneaded under pressure at a high temperature using the extruder. The temperature condition during kneading is as described above, and it is preferable that the temperature fall within the above-described temperature range over more than half of the retention time in the extruder barrel. The pressurized condition during kneading is as described above, and when kneading is performed using an extruder, normally control of pressure is not necessary because the above-described pressurized condition is satisfied. The screw rotation speed of the extruder during kneading treatment is not particularly limited, and can be set to a general condition. For example, it is desirable that the screw rotation speed fall in the range from 50 to 500 rpm (e.g. about 250 rpm) .

In the step (iii), the composition subjected to kneading treatment under a pressurized condition at a high temperature is brought back to ordinary pressure by, for example, a method in which extrusion molding is performed while the temperature is maintained. Thereby, moisture in the composition is rapidly expanded and evaporated to cause expansion, the particle sizes of particles before and after disturbance are controlled to fall within the above-described range, a puffed food composition in which the minimum differential value measured by the above [method 1] is equal to or less than the above-described specific value can be efficiently and conveniently produced. Therefore, the moisture content of the composition of the present invention is preferably less than 20 mass%.

[Food]

The present invention encompasses foods containing the puffed food composition of the present invention. Specific examples thereof include, but are not limited to, confectioneries, and rice crackers.

Examples

The present invention will now be described in more detail with reference to Examples, but these Examples are illustrative only for convenience of description, and the present invention is not limited to these Examples in any sense.

[Preparation of Puffed Food Composition 1]

<Comparative Examples 1 to 6 and Test Examples 1 to 37>

The puffed food compositions of Comparative Examples 1 to 6 and Test Examples 1 to 37 were prepared using materials shown in Table 3 below. Specifically, for the dried products of yellow pea (unhulled), yellow pea (hulled), chickpea (unhulled), white kidney bean (hulled), broad pea (hulled), white pea (hulled), green pea (hulled) and mug bean (hulled) which are a type of pulses, paprika, carrot, cabbage, beet (beet root), burdock, pumpkin (the whole of the inedible part and the edible part), pumpkin seeds and lotus roots which are a type of vegetables, corn and brown rice which are a type of grain, and potato which is a type of potatoes, drying treatment was performed until at least the water activity value attained 0.95 or less, and powderization was performed. As the edible part of each food stuff, parts which are generally eaten or drunk (parts other than the inedible part) were used, and as the inedible part of some foodstuffs, pith, seeds and both ends of pumpkin, or seeds of pumpkin were used. Potato granules, corn grits and rice starch which are a type of processed products of edible plants mainly containing starch, rapeseed oil which is a type of fat/oil, and calcium carbonate which is a type of food additives (expanding agents) were appropriately mixed with the obtained dry powder in accordance with the raw material combination ratio shown in Table 3, and water was added as appropriate to prepare a pasty dough. Subsequently, using a twin screw extruder manufactured by Suehiro EPM Corporation as an extruder, the prepared pasty dough composition was adjusted to an outlet temperature of 120°C and kneaded under a pressurized condition of 3 MPa, and then extruded under ordinary pressure to rapidly reduce the pressure on the periphery of the composition, so that moisture inside the composition was vaporized to perform expansion treatment. In this way, puffed food compositions were prepared. All the puffed food compositions had a moisture content of less than 20 mass%.

[Preparation of Puffed Food Composition 2]

<Test Example 38>

200 g of water was added to 100 g of the yellow pea (unhulled) powder, and the mixture was heated and simultaneously kneaded at 98°C for 10 minutes to prepare a dough composition. Subsequently, the dough composition was molded into a flat plate shape with a thickness of 4 mm, and fired at 220°C for 10 minutes, so that moisture inside the composition was vaporized to perform expansion treatment. In this way, puffed food compositions were prepared. All the puffed food compositions had a moisture content of less than 10 mass%.

(Measurement of Contents of Ingredients in Puffed Food Composition)

Each puffed food composition was appropriately weighed and taken, and the insoluble dietary fiber content was measured in accordance with the method described in "Food Labeling Standards" (Cabinet Office Ordinance No. 10, 2015) and "the Standard Tables of Food Composition in Japan, 2015, (Seventh Revised Version) Analysis Manual" using a modified Prosky method. The protein content was measured in accordance with "the Standard Tables of Food Composition in Japan, 2015, (Seventh Revised Version) Analysis Manual" using a Kjeldahl method-nitrogen-to-protein conversion method. The total fat/oil content was measured in accordance with the method described in "Food Labeling Standards" (Cabinet Office Ordinance No. 10, 2015) using a chloroform/methanol mixed liquid extraction method. The starch content was measured in accordance with the method described in "AOAC996.11" using a method including performing 80% ethanol extraction treatment to remove soluble carbohydrates (e.g. glucose, maltose and maltodextrin) which affect measured values.

(Measurement of Density)

The density was measured by dividing the mass of each puffed food composition by the volume of an imaginary rectangular parallelepiped having the smallest volume among imaginary rectangular parallelepipeds in which the composition is inscribed.

(Measurement of Particle Size d60 etc. in Dispersion Liquid of Puffed Food Composition)

A solution (2 mass% water dispersion liquid of puffed food composition) obtained by immersing 1 g of the puffed food composition in 50 g of distilled water at about 80°C, leaving the composition to stand for about 5 minutes, then sufficiently performing stirring with a spatula to suspend the composition, and causing the resulting suspension to pass through a new JIS 7.5-mesh sieve with an aperture of 2.36 mm and a wire diameter of 1.0 mm is used as a sample for measuring the particle size distribution.

Using Microtrac MT3300 EXII system of MicrotracBEL Corporation as a laser diffraction particle size distribution analyzer, the particle size distribution of particles in the dispersion liquid of each puffed food composition was measured. As the measurement application software, DMS2 (Data Management System version 2, MicrotracBEL Corporation) was used. Distilled water was used as the solvent during measurement, and measurement was performed by pressing down the washing button of the measurement application software to implement washing, then pressing down the set zero button of the software to implement zero adjustment, and directly feeding a sample by sample loading until the concentration of the sample fell within an appropriate range.

For measurement of the particle size before ultrasonication, to which disturbance had not been applied, laser diffraction measurement was performed at a flow rate of 60% for a measurement time of 10 seconds immediately after adjustment of the concentration of the sample within an appropriate range during sample loading performed two times after feeding of the sample. The result was used as the measured value. On the other hand, for measurement of the particle size after ultrasonication, to which disturbance had been applied, a sample was fed, the concentration of the sample was then adjusted within an appropriate range by sample loading, and the ultrasonication button of the software was then pressed down to apply an ultrasonic wave with a frequency of 40 kHz at an output of 40 W for 3 minutes. Subsequently, defoaming was performed three times, and then sample loading was performed again. Immediately after verification that the concentration was still within the appropriate range, and laser diffraction measurement was performed at a flow rate of 60% for a measurement time of 10 seconds. Using the obtained result as the measured value, the maximum particle size, the integrated diameter at 60% (d60), the integrated frequency in % in the range of 20 $\mu$m or more and 2,000 $\mu$m or less, and the like were measured. The measurement conditions were distribution display: volume, particle refractive index: 1.60, solvent refractive index: 1.333, upper limit of measurement ($\mu$m) = 2,000.00 $\mu$m, and lower limit of measurement ($\mu$m) = 0.021 $\mu$m.

In measurement of the particle size distribution of the sample at each channel, measurement was performed using the particle size at each measurement channel shown in Table 2 above as the standard. The particle frequency of each channel was determined by measuring the frequency of particles that are not larger than the particle size specified for each channel and larger than the particle size (in the channel largest in the measurement range, measurement lower limit of particle size) specified for the channel of a larger number by one for each channel and using the total frequency of all channels in the measurement range as the denominator. Specifically, the particle frequency in % at each of the 132 channels was measured. The particle size of a channel which is the largest in particle size from the result obtained by measurement was used as the maximum particle size.

(Measurement of Minimum Differential Value of Stress Value and Maximum Stress of Puffed Food Composition at Deformation Rate of Less Than 60% (or 40%)

The projection area when a texture analyzer (RE2-3305S manufactured by Yamaden Co., Ltd.) and a load cell (LC2-3305B-200N manufactured by Yamaden Co., Ltd.) are used, the surface of the puffed food composition at a product temperature of 20°C was pressed at a descending speed of 1 mm/sec to a deformation rate of 60% (or 40%) with a disc-like plunger having a diameter of 30 mm and the composition on the stage was observed in a vertical direction from above was taken as the contact area, stress per unit contact area (kN/m$^2$) was continuously measured at intervals of 0.02 seconds, and the stress value difference (kN/m$^2$) between the deformation rates was divided by the deformation rate difference (%) to determine the differential value (kN/m$^2$%) at each deformation rate (%). The differential value was calculated by measuring the stress value at intervals of 0.02 seconds. Specifically, for the measured value at arbitrary measurement time T1 second (deformation rate Xi% and stress P1 (kN/m$^2$)) and the measured value at T1 + 0.02 seconds (deformation rate Xii% and stress P2 (kN/m$^2$)), the differential value at deformation rate Xi% (measurement time T1 seconds) was measured by dividing the stress value difference P2 - P1 (kN/m$^2$) by deformation rate difference Xii - Xi% ("method 1" described above). The maximum stress at a deformation rate of less than 60% was determined as the maximum value of stress obtained in the same manner as in the measurement of the minimum differential value. The average value of ten measurements made for each composition by the above-described method was employed as the measured value.

(Sensory Evaluation of Puffed Food Composition)

For the puffed food compositions of Comparative Examples 1 to 6 and Test Examples 1 to 38 obtained in accordance with the above-described procedure, sensory evaluation was performed in accordance with the following procedure.

First, the sensory inspectors who would carry out each sensory test were chosen from inspectors who were trained for discrimination in taste, texture, appearance and the like of foods in advance and showed particularly excellent results, had experience in product development and a wealth of knowledge about the quality of foods, such as taste, texture and appearance and were capable of performing absolute evaluation on each sensory inspection item.

Next, ten trained sensory inspectors chosen in accordance with the above procedure carried out sensory tests for evaluating the quality of the puffed food composition of each of Comparative Examples and Test Examples. In the sensory tests, evaluation was performed on a five-point scale in accordance with the following criteria on each of the items of "stickiness to the teeth during chewing", "crispy texture", "astringent taste" and "comprehensive evaluation".

In each of the evaluation items, all the inspectors evaluated standard samples in advance, and each score of the evaluation criteria was standardized. The sensory inspection was then performed with objectivity by 10 inspectors. The evaluation of each of the items was made by selecting a rating closest to the inspector's own evaluation in five-grade scale of each item. The total result of the evaluation was calculated from the arithmetic mean values of the scores by 10 inspectors, and rounded off to the closest whole number.

<Evaluation Criterion No. 1: Stickiness to Teeth During Chewing>

5: Unlikely to stick to the teeth;
4: Somewhat unlikely to stick to the teeth;
3: Stickiness to the teeth is moderate but is at an acceptable level;
2: Somewhat easily stick to the teeth; and
1: Easily stick to the teeth.

<Evaluation Criterion 2: Crispy Texture>

5: Crispy texture is sufficiently strongly sensed;
4: Crispy texture is somewhat strongly sensed;
3: Crispy texture is moderate but is at an acceptable level;
2: Crispy texture is somewhat weak; and
1: Crispy texture is weak.

<Evaluation Criterion 3: Astringent Taste>

5: Astringent taste is weak;
4: Astringent taste is somewhat weak;
3: Astringent taste is sensed but is at an acceptable level;
2: Astringent taste is somewhat strong; and
1: Astringent taste is strong.

<Evaluation Criterion 4: Comprehensive Evaluation>

5: Unpleasant taste and sticking to the teeth are not sensed at all, and the taste is good;
4: Unpleasant taste and sticking to the teeth are hardly sensed, and the taste is somewhat good;
3: Unpleasant taste and sticking to the teeth are moderate, and the taste is at an acceptable level;
2: Unpleasant taste and sticking to the teeth are sensed, and the taste is not so good; and
1: Unpleasant taste and sticking to the teeth are strongly sensed, and the taste is not good.

[Results of Analysis and Evaluation on Puffed Food Composition]

Table 4 shows the results of analysis on the puffed food compositions of Comparative Examples 1 to 6 and Test Examples 1 to 38, and Table 5 shows the results of evaluation in the sensory test.

[Table 3]

Raw material combination ratio (mass%)

| | Total | Calcium carbonate | Rapeseed oil | Rice starch | Potato granule | Brown rice powder | Potato powder | Lotus root powder | Corn grits | Corn powder (inedible | Pumpkin seed | Pumpkin powder (inedible | Carrot powder (inedible | Beet powder | Cabbage powder | Paprika powder | Burdock powder | Mug bean powder | Green pea powder | White pea powder | Broad bean | White bean | Chickpea powder | Yellow pea powder | Yellow pea powder |
|---|---|---|---|---|---|---|---|---|---|---|---|---|---|---|---|---|---|---|---|---|---|---|---|---|---|
| Test Example 1 | 100 | | | | | | | | | 40 | | | 10 | | 10 | | | | | | | | | | 50 |
| Test Example 2 | 100 | | | | | | 20 | | | 40 | | | 10 | | 10 | | | | | | | | | | 20 |
| Test Example 3 | 100 | | | | | | | | | 45 | | | 10 | | 10 | | | | | | | | | | 35 |
| Test Example 4 | 100 | | | | | | | | | 40 | | | 10 | | 10 | | | | | | | | | | 20 |
| Test Example 5 | 100 | | | | | | | | | | | | | | | | | | | | | | | | 100 |
| Test Example 6 | 100 | | | | | 20 | | | | | | | | | | | | | | | 50 | | | | |
| Test Example 7 | 100 | | | | | | 50 | | | | | | 60 | | | 5 | | | | 35 | | | | | |
| Test Example 8 | 100 | | | | | | | | | | | | 55 | | | | | | | 45 | | | | | |
| Test Example 9 | 100 | | | | | | 20 | | | 40 | | | 15 | | 10 | 5 | | | | 25 | | | | | |
| Test Example 10 | 100 | | | | | | 20 | | | 30 | | | 10 | | | | | | | | | | | | 25 |
| Test Example 11 | 100 | | | | | | 25 | | | 30 | | | 15 | | | 5 | | | | 25 | | | | | |
| Test Example 12 | 100 | | | | | | | | | 40 | | 40 | 10 | | 10 | 5 | | | | | | | | | 40 |
| Test Example 13 | 100 | | | | | | | 20 | | 20 | | | 10 | | 10 | | | | | | | | | | 40 |
| Test Example 14 | 100 | | | | | 10 | | | | | | | 10 | | 10 | | | | | | | | | | 30 |
| Test Example 15 | 100 | | | | | | 20 | | | | | | | | | | | | | | | | | | 25 |
| Test Example 16 | 100 | | | | | | 20 | | | 55 | | | | | 50 | | 55 | | | 50 | | | | | 25 |
| Test Example 17 | 100 | | | | | | | | | | | | | 55 | 10 | 5 | | | | | | | | | |
| Test Example 18 | 100 | | | | 20 | | | | | 20 | 20 | | 10 | | | | | | | | | | | | 20 |
| Test Example 19 | 100 | | | | | | 17 | | | | | | 60 | | | | | | | 18 | | | | | |
| Test Example 20 | 100 | | | | | | | | | | | | | | | | | | | 45 | | 100 | | | |
| Test Example 21 | 100 | | | | | | | | | | | | | | | | | | | | | | | | |
| Test Example 22 | 100 | | | | | | 35 | 70 | | 25 | | | 40 | | 10 | | | | | | | | | | |
| Test Example 23 | 100 | | | | | | | | | 10 | | 60 | 10 | | 10 | | | | | | | | | | |
| Test Example 24 | 100 | | | | | | | | | | | 80 | 30 | | 10 | | | | | | | | | | |
| Test Example 25 | 100 | | | | | | | | | | | | 10 | | | | | | | | | | | | |
| Test Example 26 | 100 | | | 80 | | | | | | | | | | | | | | | | | | | | | 20 |
| Test Example 27 | 100 | | | 70 | | | | | | | | | | | | | | | | | | | | | 30 |

Raw material combination ratio (mass%)

| | Total | Calcium carbonate | Rapeseed oil | Rice starch | Potato granule | Brown rice powder | Potato powder | Lotus root powder | Corn grits | Corn powder (inedible | Pumpkin seed | Pumpkin powder (inedible | Carrot powder (inedible | Beet powder | Cabbage powder | Paprika powder | Burdock powder | Mug bean powder | Green pea powder | White pea powder | Broad bean | White bean | Chickpea powder | Yellow pea powder | Yellow pea powder |
|---|---|---|---|---|---|---|---|---|---|---|---|---|---|---|---|---|---|---|---|---|---|---|---|---|---|
| Test Example 28 | 100 | | | 60 | | | | | | | | | | | | | | | | | | | | | 40 |
| Test Example 29 | 100 | | | 50 | | | | | | | | | | | | | | | | | | | | | 50 |
| Test Example 30 | 100 | | | | | | | | | | | | 43 | | 45 | | | | | | | | | | 12 |
| Test Example 31 | 100 | | | | | | | | | | | | 40 | | 40 | | | | | | | | | | 20 |
| Test Example 32 | 100 | | | | | | | | | | | | 35 | | 35 | | | | | | | | | | 30 |
| Test Example 33 | 100 | | | | | | | | | | | | 30 | | 30 | | | | | | | | | | 40 |
| Test Example 34 | 100 | | | | | | | | | 100 | | | | | | | | | | | | | | | |
| Test Example 35 | 100 | | | | | | | | | | | | | | | | | | | | | | 100 | | |
| Test Example 36 | 100 | | | | | | | | | | | | | | | | | | 100 | | | | | | |
| Test Example 37 | 100 | | | | | | 20 | | | 40 | | | 10 | | 10 | | | | | | | | | 20 | |
| Test Example 38 | 100 | | | | | | | | | | | | | | | | | | | | | | | | |
| Comp. Ex. 1 | 100 | | | | | | | | | | | | 45 | | 45 | | | | | | | | | | 10 |
| Comp. Ex. 2 | 100 | | | | | 100 | | | | | | | | | | | | | | | | | | | |
| Comp. Ex. 3 | 100 | | | 90 | | | | | | | | | | | | | | | | | | | | | 10 |
| Comp. Ex. 4 | 100 | | 60 | | | | | | 40 | | | | | | | | | | | | | | | | |
| Comp. Ex. 5 | 100 | | 45 | | | | | | 55 | | | | | | | | | | | | | | | | |
| Comp. Ex. 6 | 100 | 0.08 | | | | | | | | | | | | | | | | 99.92 | | | | | | | |

Test Example 38: Shown in description (Preparation of Puffed Food Composition 2)

23

[Table 4]

| | Composition measured value | | | | | | | | | | | | | | | |
|---|---|---|---|---|---|---|---|---|---|---|---|---|---|---|---|---|
| | Edible plant content (mass%) | Proportion of inedible part of edible plant with respect to the whole composition (mass%) | Insoluble dietary fiber content (mass%) | Protein content (mass%) | Total fat/oil content (mass%) | Starch content (mass%) | Proportion of purified starch with respect to total starch content of composition (mass%) | Proportion of pulse-derived starch with respect to total starch content of composition (mass%) | Density (g/cm$^3$) | Maximum particle size before ultra-sonication ($\mu$m) | Particle size (d60) after ultra-sonication ($\mu$m) | Difference in integrated frequency in % of particles with a particle size of 20 $\mu$m or more and 2,000 $\mu$m or less before and after ultrasonication (%) | Maximum stress (deformation rate: less than 60%) (kN/m$^2$) | Minimum differential value of stress value (deformation rate: less than 40%) (kN/m$^2$) | Minimum differential value of stress value (deformation rate: less than 60%) (kN/m$^2$) |
| Test Example 1 | 100.00 | 20.50 | 22.1 | 15.4 | 4.1 | 23.0 | 0.0 | 80.5 | 0.55 | 704 | 122 | 9 | 818 | -599 | -599 |
| Test Example 2 | 100.00 | 25.50 | 21.2 | 11.4 | 3.7 | 23.8 | 0.0 | 31.1 | 0.60 | 2,000 | 257 | 7 | 556 | -735 | -735 |
| Test Example 3 | 100.00 | 28.00 | 22.6 | 13.9 | 4.3 | 18.1 | 0.0 | 71.6 | 0.64 | 1,184 | 233 | 8 | 1,011 | -554 | -554 |
| Test Example 4 | 100.00 | 25.50 | 19.2 | 11.6 | 4.2 | 27.4 | 0.0 | 27.0 | 0.55 | 2,000 | 212 | 6 | 801 | -432 | -432 |
| Test Example 5 | 100.00 | 0.00 | 16.2 | 21.7 | 2.3 | 37.0 | 0.0 | 100.0 | 0.50 | 2,000 | 199 | 9 | 601 | -845 | -845 |
| Test Example 6 | 100.00 | 0.00 | 10.4 | 16.2 | 1.2 | 45.8 | 0.0 | 35.4 | 0.67 | 1,535 | 222 | 5 | 1,175 | -928 | -1,122 |
| Test Example 7 | 100.00 | 3.50 | 15.5 | 10.8 | 1.8 | 13.4 | 0.0 | 96.4 | 0.52 | 1,184 | 90 | 2 | 1,122 | -543 | -543 |
| Test Example 8 | 100.00 | 2.75 | 16.1 | 12.5 | 1.9 | 17.1 | 0.0 | 97.4 | 0.51 | 1,184 | 60 | 2 | 985 | -578 | -1,029 |
| Test Example 9 | 100.00 | 20.75 | 21.4 | 11.5 | 3.7 | 25.6 | 0.0 | 36.1 | 0.64 | 1,408 | 161 | 9 | 1,095 | -894 | -894 |

(continued)

| | Composition measured value | | | | | | | | | | | | | | | |
|---|---|---|---|---|---|---|---|---|---|---|---|---|---|---|---|---|
| | Edible plant content (mass%) | Proportion of inedible part of edible plant with respect to the whole composition (mass%) | Insoluble dietary fiber content (mass%) | Protein content (mass%) | Total fat/oil content (mass%) | Starch content (mass%) | Proportion of purified starch with respect to total starch content of composition (mass%) | Proportion of pulse-derived starch with respect to total starch content of composition (mass%) | Density (g/cm³) | Maximum particle size before ultra-sonication (μm) | Particle size (d60) after ultrasonication (μm) | Difference in integrated frequency in % of particles with a particle size of 20 μm or more and 2,000 μm or less before and after ultrasonication (%) | Maximum stress (deformation rate: less than 60%) (kN/m²) | Minimum differential value of stress value (deformation rate: less than 40%) (kN/m²) | Minimum differential value of stress value (deformation rate: less than 60%) (kN/m²) |
| Test Example 10 | 100.00 | 21.00 | 19.2 | 11.8 | 3.2 | 24.6 | 0.0 | 37.6 | 0.31 | 1,674 | 208 | 7 | 424 | -375 | -381 |
| Test Example 11 | 100.00 | 16.25 | 19.2 | 11.0 | 3.1 | 27.5 | 0.0 | 33.7 | 0.37 | 837 | 110 | 8 | 392 | -342 | -342 |
| Test Example 12 | 100.00 | 25.50 | 21.9 | 14.5 | 4.1 | 19.4 | 0.0 | 76.4 | 0.60 | 1,408 | 204 | 4 | 400 | -544 | -544 |
| Test Example 13 | 100.00 | 15.50 | 17.4 | 14.3 | 2.8 | 27.4 | 0.0 | 54.0 | 0.65 | 2,000 | 260 | 3 | 654 | -654 | -654 |
| Test Example 14 | 100.00 | 11.50 | 15.3 | 13.2 | 3.3 | 36.2 | 0.0 | 30.7 | 0.64 | 2,000 | 140 | 5 | 555 | -456 | -456 |
| Test Example 15 | 100.00 | 27.50 | 23.7 | 12.2 | 4.5 | 27.1 | 0.0 | 34.1 | 0.59 | 1,408 | 152 | 7 | 760 | -565 | -565 |

(continued)

| | Composition measured value | | | | | | | | | | | | | | |
|---|---|---|---|---|---|---|---|---|---|---|---|---|---|---|---|
| | Edible plant content (mass%) | Proportion of inedible part of edible plant with respect to the whole composition (mass%) | Insoluble dietary fiber content (mass%) | Protein content (mass%) | Total fat/oil content (mass%) | Starch content (mass%) | Proportion of purified starch with respect to total starch content of composition (mass%) | Proportion of pulse-derived starch with respect to total starch content of composition (mass%) | Density (g/cm³) | Maximum particle size before ultrasonication (μm) | Particle size (d60) after ultrasonication (μm) | Difference in integrated frequency in % of particles with a particle size of 20 μm or more and 2,000 μm or less before and after ultrasonication (%) | Maximum stress (deformation rate: less than 60%) (kN/m²) | Minimum differential value of stress value (deformation rate: less than 40%) (kN/m²) | Minimum differential value of stress value (deformation rate: less than 60%) (kN/m²) |
| Test Example 16 | 100.00 | 0.00 | 13.2 | 10.7 | 0.9 | 21.1 | 0.0 | 43.9 | 0.63 | 592 | 103 | 9 | 859 | -534 | -534 |
| Test Example 17 | 100.00 | 25.00 | 15.1 | 17.4 | 2.2 | 19.0 | 0.0 | 97.4 | 0.61 | 2,000 | 214 | 6 | 901 | -854 | -854 |
| Test Example 18 | 80.00 | 35.50 | 17.3 | 11.5 | 3.3 | 31.2 | 41.0 | 23.7 | 0.59 | 419 | 150 | 4 | 443 | -423 | -423 |
| Test Example 19 | 100.00 | 3.50 | 15.0 | 8.2 | 1.5 | 17.2 | 0.0 | 38.7 | 0.49 | 996 | 56 | 14 | 980 | -676 | -676 |
| Test Example 20 | 100.00 | 2.75 | 18.2 | 14.8 | 1.6 | 18.9 | 0.0 | 88.3 | 0.51 | 2,000 | 175 | 6 | 1,010 | -675 | -675 |
| Test Example 21 | 100.00 | 0.00 | 16.0 | 19.9 | 2.2 | 35.2 | 0.0 | 100.0 | 0.62 | 1,184 | 223 | 2 | 544 | -412 | -412 |

(continued)

| | Composition measured value | | | | | | | | | | | | | | |
|---|---|---|---|---|---|---|---|---|---|---|---|---|---|---|---|
| | Edible plant content (mass%) | Proportion of inedible part of edible plant with respect to the whole composition (mass%) | Insoluble dietary fiber content (mass%) | Protein content (mass%) | Total fat/oil content (mass%) | Starch content (mass%) | Proportion of purified starch with respect to total starch content of composition (mass%) | Proportion of pulse-derived starch with respect to total starch content of composition (mass%) | Density (g/cm³) | Maximum particle size before ultrasonication (μm) | Particle size (d60) after ultrasonication (μm) | Difference in integrated frequency in % of particles with a particle size of 20 μm or more and 2,000 μm or less before and after ultrasonication (%) | Maximum stress (deformation rate: less than 60%) (kN/m²) | Minimum differential value of stress value (deformation rate: less than 40%) (kN/m²) | Minimum differential value of stress value (deformation rate: less than 60%) (kN/m²) |
| Test Example 22 | 100.00 | 14.50 | 18.6 | 6.7 | 2.5 | 23.8 | 0.0 | 0.0 | 0.67 | 1,408 | 127 | 9 | 755 | -490 | -490 |
| Test Example 23 | 100.00 | 10.50 | 12.2 | 9.3 | 1.4 | 37.0 | 0.0 | 0.0 | 0.58 | 1,184 | 145 | 5 | 432 | -734 | -734 |
| Test Example 24 | 100.00 | 15.50 | 16.9 | 9.0 | 3.6 | 26.1 | 0.0 | 0.0 | 0.60 | 996 | 139 | 5 | 654 | -432 | -432 |
| Test Example 25 | 100.00 | 17.50 | 17.2 | 10.1 | 4.2 | 34.6 | 0.0 | 0.0 | 0.53 | 996 | 111 | 2 | 512 | -60 | -337 |
| Test Example 26 | 20.00 | 0.00 | 3.2 | 4.5 | 1.0 | 78.8 | 90.6 | 9.4 | 0.27 | 352 | 20 | 23 | 324 | -302 | -140 |
| Test Example 27 | 30.00 | 0.00 | 4.9 | 6.7 | 1.2 | 73.6 | 84.9 | 15.1 | 0.30 | 543 | 55 | 20 | 390 | -308 | -203 |

(continued)

| | Composition measured value | | | | | | | | | | | | | | |
|---|---|---|---|---|---|---|---|---|---|---|---|---|---|---|---|
| | Edible plant content (mass%) | Proportion of inedible part of edible plant with respect to the whole composition (mass%) | Insoluble dietary fiber content (mass%) | Protein content (mass%) | Total fat/oil content (mass%) | Starch content (mass%) | Proportion of purified starch with respect to total starch content of composition (mass%) | Proportion of pulse-derived starch with respect to total starch content of composition (mass%) | Density (g/cm$^3$) | Maximum particle size before ultra-sonication (μm) | Particle size (d60) after ultrasonication (μm) | Difference in integrated frequency in % of particles with a particle size of 20 μm or more and 2,000 μm or less before and after ultrasonication (%) | Maximum stress (deformation rate: less than 60%) (kN/m$^2$) | Minimum differential value of stress value (deformation rate: less than 40%) (kN/m$^2$) | Minimum differential value of stress value (deformation rate: less than 60%) (kN/m$^2$) |
| Test Example 28 | 40.00 | 0.00 | 6.5 | 8.8 | 1.3 | 68.4 | 78.4 | 21.6 | 0.35 | 704 | 101 | 18 | 510 | -310 | -310 |
| Test Example 29 | 50.00 | 0.00 | 8.1 | 11.0 | 1.5 | 63.2 | 70.7 | 29.3 | 0.38 | 1,086 | 180 | 14 | 745 | -325 | -325 |
| Test Example 30 | 100.00 | 24.65 | 15.1 | 10.6 | 1.9 | 5.2 | 0.0 | 84.8 | 0.74 | 2,000 | 830 | 25 | 1,320 | -700 | -1,010 |
| Test Example 31 | 100.00 | 22.00 | 15.2 | 11.5 | 1.9 | 8.1 | 0.0 | 91.1 | 0.70 | 1,291 | 457 | 9 | 1,222 | -566 | -990 |
| Test Example 32 | 100.00 | 19.25 | 15.4 | 12.8 | 2.0 | 11.7 | 0.0 | 94.6 | 0.67 | 1,184 | 228 | 7 | 1,134 | -530 | -801 |
| Test Example 33 | 100.00 | 16.50 | 15.5 | 14.1 | 2.0 | 15.3 | 0.0 | 96.5 | 0.65 | 996 | 180 | 4 | 950 | -450 | -755 |

(continued)

| | Edible plant content (mass%) | Proportion of inedible part of edible plant with respect to the whole composition (mass%) | Insoluble dietary fiber content (mass%) | Protein content (mass%) | Total fat/oil content (mass%) | Starch content (mass%) | Proportion of purified starch with respect to total starch content of composition (mass%) | Proportion of pulse-derived starch with respect to total starch content of composition (mass%) | Density (g/cm³) | Maximum particle size before ultra-sonication (μm) | Particle size (d60) after ul-trasonication (μm) | Difference in integrated frequency in % of particles with a particle size of 20 μm or more and 2,000 μm or less before and after ultrasonication (%) | Maximum stress (deformation rate: less than 60%) (kN/m²) | Minimum differential value of stress value (deformation rate: less than 40%) (kN/m²) | Minimum differential value of stress value (deformation rate: less than 60%) (kN/m²) |
|---|---|---|---|---|---|---|---|---|---|---|---|---|---|---|---|
| | | | | | | | | | Composition measured value | | | | | | |
| Test Example 34 | 100.00 | 50.00 | 31.0 | 10.0 | 7.0 | 11.0 | 0.0 | 0.0 | 0.83 | 1,184 | 275 | 31 | 1,372 | -950 | -950 |
| Test Example 35 | 100.00 | 0.00 | 16.3 | 20.0 | 5.2 | 35.4 | 0.0 | 100.0 | 0.85 | 2,000 | 115 | 9 | 2,736 | -1,392 | -1,392 |
| Test Example 36 | 100.00 | 0.00 | 16.2 | 21.7 | 2.3 | 37.0 | 0.0 | 100.0 | 0.81 | 1,408 | 243 | 29 | 4,645 | -119 | -1,229 |
| Test Example 37 | 100.00 | 25.50 | 21.2 | 11.4 | 3.7 | 23.8 | 0.0 | 31.1 | 0.84 | 2,000 | 255 | 27 | 3,454 | -857 | -1,321 |
| Test Example 38 | 100.00 | 0.00 | 7.5 | 17.7 | 2.7 | 50 | 0.0 | 100.0 | 0.18 | 2000 | 52 | 86 | 312 | -18 | -107 |
| Comp. Ex. 1 | 100.00 | 24.75 | 15.1 | 10.3 | 1.9 | 4.5 | 0.0 | 82.0 | 0.82 | 2,000 | 1,080 | 26 | 3,840 | -654 | -1,321 |
| Comp. Ex. 2 | 10.00 | 0.00 | 1.6 | 2.4 | 0.9 | 84.1 | 95.6 | 4.4 | 0.18 | 913 | 10 | 30 | 294 | -30 | -30 |

(continued)

| | Composition measured value | | | | | | | | | | | | | | |
|---|---|---|---|---|---|---|---|---|---|---|---|---|---|---|---|
| | Edible plant content (mass%) | Proportion of inedible part of edible plant with respect to the whole composition (mass%) | Insoluble dietary fiber content (mass%) | Protein content (mass%) | Total fat/oil content (mass%) | Starch content (mass%) | Proportion of purified starch with respect to total starch content of composition (mass%) | Proportion of pulse-derived starch with respect to total starch content of composition (mass%) | Density (g/cm$^3$) | Maximum particle size before ultrasonication ($\mu$m) | Particle size (d60) after ultrasonication ($\mu$m) | Difference in integrated frequency in % of particles with a particle size of 20 $\mu$m or more and 2,000 $\mu$m or less before and after ultrasonication (%) | Maximum stress (deformation rate: less than 60%) (kN/m$^2$) | Minimum differential value of stress value (deformation rate: less than 40%) (kN/m$^2$) | Minimum differential value of stress value (deformation rate: less than 60%) (kN/m$^2$) |
| Comp. Ex. 3 | 40.00 | 0.00 | 0.9 | 3.3 | 60.4 | 29.6 | 0.0 | 0.0 | 0.15 | 837 | 54 | 27 | 71 | -15 | -15 |
| Comp. Ex. 4 | 55.00 | 0.00 | 1.2 | 4.5 | 45.6 | 40.7 | 0.0 | 0.0 | 0.17 | 1,674 | 64 | 26 | 213 | -7 | -25 |
| Comp. Ex. 5 | 100.00 | 0.00 | 2.9 | 7.1 | 2.9 | 77.0 | 0.0 | 0.0 | 0.14 | 2,000 | 154 | 13 | 172 | -80 | -97 |
| Comp. Ex. 6 | 99.92 | 0.00 | 14.0 | 25.1 | 1.5 | 39.9 | 0.0 | 100.0 | 0.26 | 2,000 | 201 | 14 | 130 | -20 | -80 |

[Table 5]

| | Sensory inspection | | | |
|---|---|---|---|---|
| | Stickiness to teeth during chewing | Crispy texture | Astringent taste | Comprehensive evaluation |
| Test Example 1 | 5 | 5 | 5 | 5 |
| Test Example 2 | 5 | 5 | 5 | 5 |
| Test Example 3 | 5 | 5 | 5 | 5 |
| Test Example 4 | 5 | 5 | 5 | 4 |
| Test Example 5 | 5 | 5 | 5 | 5 |
| Test Example 6 | 5 | 5 | 5 | 5 |
| Test Example 7 | 5 | 5 | 5 | 5 |
| Test Example 8 | 5 | 5 | 5 | 5 |
| Test Example 9 | 5 | 5 | 5 | 5 |
| Test Example 10 | 5 | 5 | 5 | 5 |
| Test Example 11 | 5 | 5 | 4 | 4 |
| Test Example 12 | 5 | 5 | 5 | 5 |
| Test Example 13 | 5 | 5 | 5 | 5 |
| Test Example 14 | 5 | 5 | 5 | 5 |
| Test Example 15 | 5 | 5 | 5 | 5 |
| Test Example 16 | 5 | 5 | 5 | 5 |
| Test Example 17 | 5 | 5 | 5 | 5 |
| Test Example 18 | 5 | 5 | 5 | 4 |
| Test Example 19 | 5 | 5 | 5 | 5 |
| Test Example 20 | 5 | 5 | 5 | 5 |
| Test Example 21 | 5 | 5 | 5 | 5 |
| Test Example 22 | 5 | 5 | 5 | 5 |
| Test Example 23 | 5 | 5 | 5 | 5 |
| Test Example 24 | 5 | 5 | 5 | 5 |
| Test Example 25 | 5 | 4 | 5 | 4 |
| Test Example 26 | 4 | 5 | 4 | 4 |
| Test Example 27 | 5 | 5 | 4 | 4 |
| Test Example 28 | 5 | 5 | 5 | 4 |
| Test Example 29 | 5 | 5 | 5 | 4 |
| Test Example 30 | 5 | 4 | 5 | 4 |
| Test Example 31 | 5 | 5 | 5 | 5 |
| Test Example 32 | 5 | 5 | 5 | 5 |
| Test Example 33 | 5 | 5 | 5 | 5 |
| Test Example 34 | 5 | 3 | 5 | 3 |
| Test Example 35 | 5 | 3 | 5 | 3 |
| Test Example 36 | 5 | 3 | 5 | 3 |

(continued)

| | Sensory inspection | | | |
|---|---|---|---|---|
| | Stickiness to teeth during chewing | Crispy texture | Astringent taste | Comprehensive evaluation |
| Test Example 37 | 5 | 3 | 5 | 3 |
| Test Example 38 | 4 | 4 | 4 | 4 |
| Comparative Example 1 | 5 | 2 | 3 | 2 |
| Comparative Example 2 | 1 | 4 | 2 | 1 |
| Comparative Example 3 | 1 | 4 | 2 | 1 |
| Comparative Example 4 | 1 | 4 | 2 | 1 |
| Comparative Example 5 | 2 | 4 | 3 | 2 |
| Comparative Example 6 | 2 | 4 | 3 | 2 |

Industrial Applicability

The puffed food composition containing insoluble dietary fibers according to the present invention and the method for producing the puffed food composition can be conveniently and widely used in the food field, and have extremely high usefulness.

**Claims**

1. A puffed food composition, comprising an edible plant and satisfying all of following characteristics (1) to (6):

(1) the puffed food composition comprises 3 mass% or more of insoluble dietary fibers;
(2) the puffed food composition comprises 5 mass% or more of starch;
(3) the puffed food composition comprises 4 mass% or more of protein;
(4) the particle size d60 of particles in a dispersion liquid of the puffed food composition after disturbance is 0.3 $\mu$m or more and 1,000 $\mu$m or less;
(5) the maximum particle size of particles in a dispersion liquid of the puffed food composition before disturbance is 200 $\mu$m or more; and
(6) the minimum differential value measured by method 1 is -100 $kN/m^2$% or less:
[method 1]
using a texture analyzer, the surface of the puffed food composition at a product temperature of 20°C is pressed with a disc-type plunger at a descending speed of 1 mm/sec to a deformation rate of 60%, the stress ($kN/m^2$) is continuously measured at intervals of 0.02 seconds, and the differential value ($kN/m^2$%) at each deformation rate (%) is determined from a change in stress value until attainment of the minimum deformation rate.

2. The puffed food composition according to claim 1, wherein the difference in integrated frequency in % of particles with a particle size of 20 $\mu$m or more and 2,000 $\mu$m or less before and after ultrasonication is 25% or less.

3. The puffed food composition according to claim 1 or 2, wherein the maximum value of stress measured by method 1 is 300 $kN/m^2$ or more.

4. The puffed food composition according to any one of claims 1 to 3, wherein a density is 1.00 $g/cm^3$ or less.

**5.** The puffed food composition according to any one of claims 1 to 4, wherein the content of the edible plant is 10 mass% or more.

**6.** The puffed food composition according to any one of claims 1 to 5, which is not a preparation by cooking with oil.

**7.** The puffed food composition according to any one of claims 1 to 6, which is a preparation by an extruder.

**8.** The puffed food composition according to any one of claims 1 to 7, comprising the inedible part of the edible plant at 1 mass% or more and 90 mass% or less with respect to the whole composition.

**9.** The puffed food composition according to any one of claims 1 to 8, wherein the edible part and the inedible part of the edible plant are derived from the same type of edible plants.

**10.** The puffed food composition according to any one of claims 1 to 9, wherein the edible part and the inedible part of the edible plant are derived from the same individual edible plant.

**11.** The puffed food composition according to any one of claims 1 to 10, wherein the edible plant is one or more selected from the group consisting of grains, potatoes, pulses, nuts, vegetables, fruits and mushrooms.

**12.** The puffed food composition according to any one of claims 1 to 11, wherein the edible plant comprises one or more pulses selected from the group consisting of Pisum, Phaseolus, Cajanus, Vigna, Vicia, Cicer and Lens.

**13.** The puffed food composition according to any one of claims 1 to 12, wherein the edible plant is one or more selected from the group consisting of paprika, beet, corn, carrot, pumpkin, cabbage, pea, chickpea, kidney bean, broad bean, mug bean, lotus beet, burdock, chickpea, rice and potato.

**14.** The puffed food composition according to any one of claims 1 to 13, comprising a seed coat of a pulse.

**15.** The puffed food composition according to any one of claims 1 to 14, wherein the proportion of purified starch with respect to the total starch content of the composition is 50 mass% or less.

**16.** The puffed food composition according to any one of claims 1 to 15, wherein the proportion of pulse-derived starch with respect to the total starch content of the composition is 30 mass% or more.

**17.** The puffed food composition according to any one of claims 1 to 16, wherein the proportion of wheat-derived starch with respect to the total starch content of the composition is 50 mass% or less.

**18.** A food comprising the puffed food composition according to any one of claims 1 to 17.

**19.** A method for producing a puffed food composition comprising an edible plant, the method comprising following steps (i) to (iii):

(i) preparing a pasty dough composition comprising an edible plant and having an insoluble dietary fiber content of 3 mass% or more in terms of dry mass, a starch content of 5 mass% or more in terms of dry mass and a protein content of 4 mass% or more in terms of dry mass;
(ii) kneading the composition of (i) at a temperature of 100°C or higher under a pressurized condition; and
(iii) bringing the composition of (ii) back to ordinary pressure at a temperature of 100°C or higher.

## INTERNATIONAL SEARCH REPORT

| International application No. |
| --- |
| PCT/JP2020/012219 |

**A. CLASSIFICATION OF SUBJECT MATTER**
Int. Cl. A23L5/00(2016.01)i, A23L7/10(2016.01)i, A23L11/00(2016.01)i, A23L19/00(2016.01)i, A23L19/12(2016.01)i, A23L25/00(2016.01)i
FI: A23L5/00 E, A23L19/00 A, A23L19/00 101, A23L19/12 Z, A23L11/00 F, A23L25/00, A23L7/10 Z

According to International Patent Classification (IPC) or to both national classification and IPC

**B. FIELDS SEARCHED**

Minimum documentation searched (classification system followed by classification symbols)
Int. Cl. A23L5/00, A23L7/10, A23L11/00, A23L19/00, A23L19/12, A23L25/00

Documentation searched other than minimum documentation to the extent that such documents are included in the fields searched
Published examined utility model applications of Japan   1922-1996
Published unexamined utility model applications of Japan   1971-2020
Registered utility model specifications of Japan   1996-2020
Published registered utility model applications of Japan   1994-2020

Electronic data base consulted during the international search (name of data base and, where practicable, search terms used)
JSTPlus/JMEDPlus/JST7580 (JDreamIII); CAplus/FSTA/WPIDS (STN)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2002-253156 A (HONEN CORP.) 10 September 2002, claims, paragraphs [0006]-[0012], example 3, comparative examples 1-5 | 1-19 |
| X | JP 2003-18970 A (EZAKI GLICO CO.) 21 January 2003, paragraphs [0011]-[0020], [0025], examples | 1-19 |

☐ Further documents are listed in the continuation of Box C.    ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02.06.2020 | 23.06.2020 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT
Information on patent family members

International application No.

PCT/JP2020/012219

| Patent Documents referred to in the Report | Publication Date | Patent Family | Publication Date |
|---|---|---|---|
| JP 2002-253156 A | 10.09.2002 | (Family: none) | |
| JP 2003-18970 A | 21.01.2003 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP SHO6255045 A
- JP 2001204388 A
- JP 2018191634 A
- JP 2008099677 A
- JP 2005021137 A

### Non-patent literature cited in the description

- *the Standard Tables of Food Composition in Japan,* 2015
- *Standard Tables of Food Composition in Japan,* 2015
- Food Labeling Standards. *Cabinet Office Ordinance No. 10,* 2015
- the Standard Tables of Food Composition in Japan. *Analysis Manual,* 2015
- the Standard Tables of Food Composition in Japan. Analysis Manual. 2015
- Table of Names of Food Additive Materials for Labeling. Japan's Specifications and Standards for Additives. 2011